# FASCICULE DE BREVET EUROPEEN

(11) **EP 2 174 031 B1**
(45) Date de publication et mention de la délivrance du brevet: **30.09.2015**
(21) Numéro de dépôt: 08806148.6
(22) Date de dépôt: 01.07.2008
(51) Int. Cl.: F16D 13/64, F16F 15/123, F16F 15/129, F16F 15/124

(54) **EMBRAYAGE A FRICTION EQUIPE D'UN PRE-AMORTISSEUR COMPORTANT DES SYSTEMES DE FROTTEMENT A HYSTERESIS ET A TIROIR DEPENDANT**
REIBUNGSKUPPLUNG MIT VORDÄMPFER EINSCHLIESSLICH HYSTERESE UND ABHÄNGIGER REINIGUNGSSCHIEBERSYSTEME
FRICTION CLUTCH WITH PRE-DAMPER INCLUDING HYSTERESIS AND DEPENDENT SLIDER FRICTION SYSTEMS

(30) Priorité: 04.07.2007 FR 0756276
(43) Date de publication de la demande: 14.04.2010
(73) Titulaire: Valeo Embrayages, 80009 Amiens (FR)
(72) Inventeur: FAFET, Olivier, F-80120 Quend Plage (FR); MINEREAU, Hugues, F-93240 Stains (FR)
(74) Mandataire: Jeuland, Mickaël
(86) Numéro de dépôt international: PCT/FR2008/051224
(87) Numéro de publication internationale: WO 2009/007642

(56) Documents cités:
- EP-A- 1 760 356
- DE-C1- 19 524 749
- FR-A- 2 801 081

## Description

La présente invention concerne un embrayage à friction, en particulier pour véhicule automobile, comportant des systèmes de frottement à hystérésis et à tiroir indépendant.

Dans un véhicule automobile, un embrayage à friction a pour fonction de transmettre un couple entre un élément rotatif d'entrée et un élément rotatif de sortie, par pincement de la friction entre un plateau de pression et un volant moteur.

En général, l'élément d'entrée est formé par un disque de friction et l'élément de sortie est formé par un moyeu destiné notamment à être couplé à un arbre d'entrée de boîte de vitesses.

L'embrayage à friction a aussi pour fonction d'assurer la continuité du couple transmis et de filtrer les vibrations en provenance du moteur, notamment grâce à des moyens d'amortissement comportant des organes élastiques et des moyens de frottement associés.

La présente invention concerne plus particulièrement un embrayage à friction, notamment pour véhicule automobile, comportant :
- un amortisseur principal interposé entre un élément d'entrée, tel qu'un disque de friction, et un voile annulaire entourant un moyeu solidaire en rotation d'un arbre mené, le moyeu comportant une denture externe destinée à engrener avec un jeu circonférentiel avec une denture interne du voile,
   dans lequel l'amortisseur principal comporte des première et seconde rondelles principales de guidage solidaires en rotation entre elles, et un voile annulaire qui, solidaire en rotation des première et seconde rondelles de guidage d'un amortisseur secondaire, est coaxial aux rondelles principales de guidage et mobile en rotation par rapport à ces rondelles principales de guidage et comportant, couplé en série avec l'amortisseur principal,
- l'amortisseur secondaire, dit pré-amortisseur, comportant les première et seconde rondelles de guidage solidaires en rotation entre elles, un voile annulaire coaxial aux rondelles de guidage et mobile en rotation par rapport aux rondelles de guidage, des moyens d'amortissement à activation immédiate et des moyens d'amortissement à activation conditionnelle qui comportent un groupe d'organes élastiques à activation conditionnelle transmettant un couple entre les rondelles de guidage et le voile annulaire, et
- un système de frottement à hystérésis variable, dit système d'hystérésis, du pré-amortisseur comportant des moyens d'hystérésis à activation conditionnelle qui, agencés entre le voile du pré-amortisseur et la première rondelle principale de guidage de l'amortisseur, comportent au moins une rondelle d'hystérésis variable et une rondelle élastique d'application de la rondelle d'hystérésis variable qui comporte, pour son activation, au moins une patte d'activation liée angulairement avec un organe élastique associé.

On connaît par exemple du document EP-A-1.760.356 de l'état de la technique, un tel embrayage à friction pour un véhicule automobile. Dans un tel embrayage, le pré-amortisseur permet en particulier d'absorber les vibrations au régime de ralenti d'un moteur à combustion interne.

Le système de frottement à hystérésis variable du pré-amortisseur a démontré son efficacité quant à la filtration et l'absorption des vibrations produites par les organes élastiques auxquels les moyens sont sélectivement associés.

Toutefois, quand le couple transmis par l'embrayage à friction augmente, les organes élastiques du pré-amortisseur sont comprimés et la denture du voile vient alors, le jeu circonférentiel annulé, buter sur la denture du moyeu.

Or, les chocs entre ces dentures, parfois relativement importants, sont à l'origine de l'émission de bruits indésirables que le système de frottement à hystérésis variable seul ne parvient pas à supprimer, les frottements produits n'étant pas suffisants pour freiner et éviter les chocs entre les dentures respectives du voile et du moyeu.

Un tel embrayage à friction ne donne donc pas entière satisfaction, en particulier du fait que subsistent des bruits indésirables provoqués par les dentures lorsqu'elles s'entrechoquent.

Il est encore à noter que les phénomènes de chocs entre les dentures à l'origine du bruit sont tout à fait différents, notamment en intensité et en énergie, des phénomènes de vibrations destinés à être filtrer et absorber par les moyens de frottement du système d'hystérésis variable.

L'invention vise notamment à résoudre les inconvénients précités de l'état de la technique, en particulier à perfectionner le pré-amortisseur d'un embrayage à friction en conservant les avantages du système d'hystérésis variable à deux étages et sans augmenter pour autant la complexité ou le coût.

Dans ce but, l'invention propose un embrayage à friction du type décrit précédemment, caractérisé en ce que l'embrayage à friction comporte un système de frottement à tiroir comportant au moins une rondelle de frottement, dite rondelle tiroir, dans lequel la rondelle tiroir comporte des moyens d'entraînement destinés à entraîner en rotation la rondelle tiroir avec un jeu circonférentiel inférieur au jeu circonférentiel précité entre la denture externe du moyeu et la denture interne du voile de l'amortisseur et dans lequel la rondelle tiroir est interposée axialement entre la rondelle de guidage du pré-amortisseur et une rondelle élastique de charge associée qui est destinée à solliciter la rondelle tiroir avec une force élastique axiale déterminée de manière à constituer un système de frottement à tiroir de type indépendant apte à réduire les bruits indésirables provoqués par les chocs entre lesdites dentures.

Avantageusement, le système à tiroir comme le système d'hystérésis sont intégrés avec le pré-amortisseur pour constituer un module pré-assemblé d'amortisseur secondaire, encore appelé "cassette pré-amortisseur", comportant en particulier deux étages d'amortissement et un système de frottement à hystérésis variable associé.

Grâce à l'agencement du système de frottement à hystérésis variable radialement au dessus du système de frottement à tiroir chacun des systèmes est susceptible de fonctionner de manière optimale pour assurer respectivement les fonctions de filtration des vibrations et la fonction de frein avant le contact entre les dentures du voile et du moyeu.

De préférence, le système de frottement à tiroir comporte une rondelle intermédiaire de frottement qui est liée en rotation sans jeu à la première des rondelles de guidage et qui est réalisée en matière plastique pour réaliser avantageusement un frottement de type mixte acier/plastique de part et d'autre axialement de la rondelle tiroir.

Avantageusement, le système de frottement à tiroir est du type indépendant, c'est-à-dire du type dans lequel la charge du tiroir - soit la force élastique sollicitant axialement la rondelle tiroir - est fournie par une rondelle élastique qui est exclusivement dédiée au système à tiroir.

Par conséquent, la valeur de la charge du tiroir est susceptible d'être déterminée de manière totalement indépendante, en particulier par rapport au système de frottement à hystérésis variable qui comporte sa propre rondelle élastique d'application.

En effet, on rappellera que, dans un système de frottement à tiroir de type dépendant, la charge du tiroir est développée par une rondelle élastique, telle que la rondelle élastique d'application du système d'hystérésis associée au deuxième étage d'amortissement du pré-amortisseur, qui sollicite donc axialement la rondelle d'hystérésis variable et la rondelle tiroir.

Suivant d'autres caractéristiques de l'invention :
- la rondelle tiroir comporte respectivement une face distale de frottement qui est destinée à coopérer avec une face proximale de frottement associée et une face proximale de frottement qui est destinée à coopérer avec une première surface de frottement portée par la face distale de la première rondelle de guidage du pré-amortisseur ;
- la face proximale de frottement destinée à coopérer avec la face distale de frottement de la rondelle tiroir est portée par la rondelle élastique de charge du système de frottement à tiroir ;
- le système de frottement à tiroir comporte une rondelle intermédiaire de frottement qui, libre axialement, est interposée axialement entre la rondelle tiroir et la rondelle élastique de charge et qui est liée en rotation sans jeu par des moyens de liaison, tels que des pattes, à la première rondelle de guidage du pré-amortisseur ;
- la face proximale de frottement destinée à coopérer avec la face distale de frottement de la rondelle tiroir est portée par la rondelle intermédiaire de frottement et en ce que la rondelle intermédiaire de frottement comporte une face distale de frottement destinée à coopérer avec une face proximale de frottement portée par la rondelle élastique de charge du système de frottement à tiroir ;
- l'embrayage à friction est du type dans lequel la rondelle d'hystérésis comporte respectivement une face proximale de frottement et une face distale de frottement, la face distale de frottement étant destinée à coopérer avec une face de frottement portée par la rondelle élastique d'application et la face proximale de frottement étant destinée à coopérer avec une deuxième surface de frottement portée par la face distale de la première rondelle de guidage du pré-amortisseur, et caractérisé en ce que la première surface de frottement associée à la rondelle tiroir est disposée radialement à l'intérieur de la deuxième surface de frottement associée à la rondelle d'hystérésis de manière que la face proximale de la première rondelle de guidage comporte des première et deuxième surfaces de frottement formant respectivement des première et deuxième pistes annulaires concentriques ;
- la première rondelle de guidage comporte un élément annulaire qui s'étend axialement en saillie à partir de la face distale et qui est agencé radialement entre lesdites première et deuxième surfaces de frottement concentriques, ledit élément comportant des moyens d'entraînement, tels que des ouvertures réalisées dans l'élément qui forme une couronne circonférentiellement discontinue, destinés à coopérer avec les moyens de liaison, tels que des pattes, de la rondelle intermédiaire de frottement de manière que la rondelle de guidage soit apte à entraîner en rotation sans jeu circonférentiel la rondelle intermédiaire de frottement, tout en laissant ladite rondelle intermédiaire de frottement libre axialement par rapport à la rondelle de guidage ;
- les moyens d'entraînement en rotation de la rondelle tiroir sont constitués par une denture interne qui est apte à engrener avec la denture externe du moyeu avec un jeu circonférentiel inférieur au jeu circonférentiel précité entre la denture externe du moyeu et la denture interne du voile de l'amortisseur ;
- les moyens d'entraînement en rotation de la rondelle tiroir sont constitués par au moins une patte d'entraînement qui s'étend axialement et qui est reçue dans une encoche complémentaire du voile du pré-amortisseur, le voile étant apte à entraîner ladite patte avec un jeu circonférentiel inférieur au jeu circonférentiel précité entre la denture externe du moyeu et la denture interne du voile de l'amortisseur ;
- la rondelle tiroir est réalisée dans un matériau métallique, tel que de l'acier ou un matériau analogue ;
- la rondelle de frottement intermédiaire du système d'hystérésis, disposée axialement entre la rondelle tiroir et la rondelle élastique de charge, est réalisée dans un matériau métallique, tel que de l'acier ou un matériau analogue ;
- la rondelle d'hystérésis est réalisée en un matériau métallique, tel que de l'acier, et en ce que au moins la face distale de frottement est portée par une rondelle de frottement en matière plastique qui est solidaire en rotation de la rondelle d'hystérésis de manière à créer un frottement mixte de type acier/plastique avec respectivement la première rondelle de guidage en matière plastique et la rondelle élastique d'application en acier ;
- la patte d'activation de la rondelle d'hystérésis comporte des surfaces de contact avec respectivement l'organe élastique à activation conditionnelle associé et le voile du pré-amortisseur, la surface de contact de la patte d'activation avec l'organe élastique comportant des moyens d'accrochage, tels qu'un ergot, destinés à coopérer avec l'organe élastique à activation conditionnelle associé afin d'accrocher la rondelle d'hystérésis sur le pré-amortisseur ;
- l'embrayage à friction comporte un module pré-assemblé constitué au moins par les rondelles de guidage, le voile du pré-amortisseur, les moyens d'amortissement comportant au moins un organe élastique à activation conditionnelle, la rondelle intermédiaire de frottement associée à la rondelle tiroir et la rondelle d'hystérésis ;
- l'embrayage à friction comporte :
   - des premiers moyens de butée comportant au moins une butée angulaire déformable élastiquement qui est agencée sur l'une des rondelles de guidage formant l'élément d'entrée du pré-amortisseur et qui, lorsque ladite rondelle de guidage se déplace dans au moins l'un des sens direct ou rétrograde, est apte à amortir les chocs entre la denture externe du moyeu et la denture interne du voile de l'amortisseur, et
   - des seconds moyens de butée comportant au moins une butée angulaire rigide qui est disposée en retrait angulairement par rapport à la butée angulaire déformable élastiquement pour limiter la déformation angulaire des premiers moyens de butée et qui est constituée par au moins l'une des faces de la denture interne du voile qui forme l'élément de sortie de l'amortisseur principal.

D'autres caractéristiques et avantages de l'invention apparaîtront à la lecture de la description détaillée qui va suivre, donnée uniquement à titre d'exemple, et pour la compréhension de laquelle on se reportera aux dessins annexés dans lesquels :
- la figure 1 est une vue en coupe axiale qui représente un exemple d'un embrayage à friction comportant un module pré-amortisseur conforme aux enseignements de l'invention et qui illustre un premier mode de réalisation de l'invention dans lequel l'entraînement en rotation de la rondelle tiroir est obtenu par engrènement d'une denture interne ;
- la figure 2 est une vue en perspective éclatée de la friction d'embrayage représentée à la figure 1 ;
- la figure 3 est une vue de détail qui représente principalement le moyeu, le voile de l'amortisseur principal et la rondelle tiroir et qui illustre notamment les jeux circonférentiels entre les dentures des éléments précités ;
- la figure 4 est une vue de côté qui représente en détail le module pré-amortisseur de l'embrayage à friction selon le premier mode de réalisation de l'invention qui illustre l'agencement concentrique des systèmes de frottement d'hystérésis variable et à tiroir ;
- la figure 5 est une vue en coupe axiale analogue à la figure 1 qui représente en détail le module pré-amortisseur intégrant les systèmes de frottement d'hystérésis variable et à tiroir et qui illustre la superposition desdits systèmes selon la direction radiale ;
- la figure 6 est une vue en perspective du voile et du module pré-amortisseur selon les figures précédentes qui représente en détail, avec un éclaté partiel, la rondelle intermédiaire de frottement associée à la rondelle tiroir et la rondelle d'hystérésis variable ;
- la figure 7 est une vue en coupe axiale analogue à la figure 5 qui représente un deuxième mode de réalisation de l'invention et qui illustre en détail un module pré-amortisseur intégrant les systèmes de frottement d'hystérésis variable et à tiroir superposés selon la direction radiale, dans lequel l'entraînement en rotation de la rondelle tiroir est obtenu par des pattes coopérant avec des encoches du voile de pré-amortisseur ;
- la figure 8 est une vue en perspective avec un éclaté partiel similaire à la figure 6 qui représente un voile et un module pré-amortisseur intégrant les systèmes de frottement d'hystérésis variable et à tiroir selon le deuxième mode de réalisation illustré à la figure 7 ;
- la figure 9 est une vue de détail qui représente principalement le moyeu, le voile du pré-amortisseur à la périphérie radialement interne des encoches dans lesquelles pénètrent avec un jeu déterminé les pattes d'entraînement en rotation de la rondelle tiroir.

Dans la description et les revendications, on utilisera à titre non limitatif les expressions telles que « externe » et « interne », « distale » et « proximale », etc. et les orientations longitudinale, verticale et transversale en référence aux définitions données dans la description et au trièdre (L, V, T) représenté sur les figures.

De plus, les éléments identiques, similaires ou analogues de l'invention seront désignés par les mêmes chiffres de référence.

Par convention, on utilisera notamment les expressions « externe » et « interne » selon la position relative des éléments par rapport à la direction radiale correspondant à l'orientation verticale, et les expressions « distale » et « proximale » selon la position relative des éléments par rapport à la direction axiale correspondant à l'orientation longitudinale, orientations définies respectivement selon le trièdre (L, V, T) représenté sur les figures.

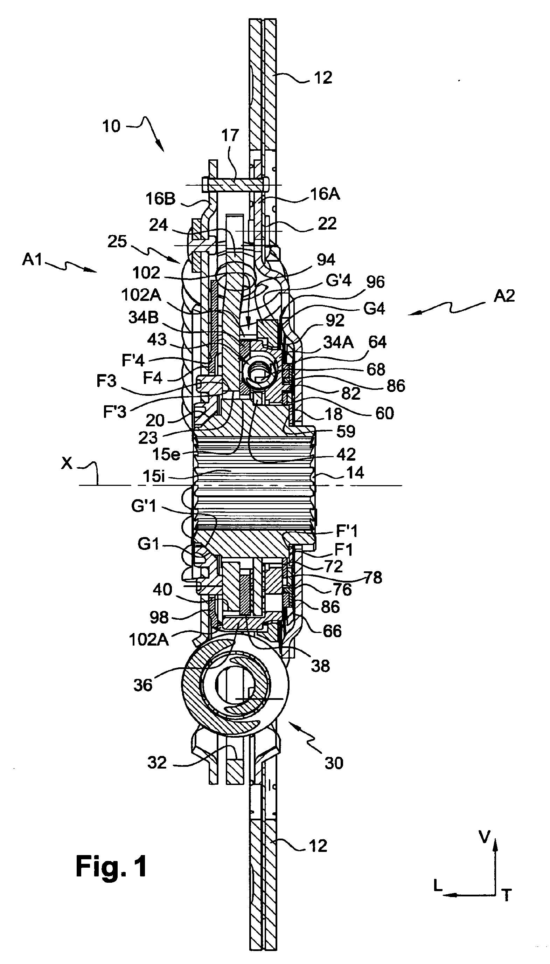

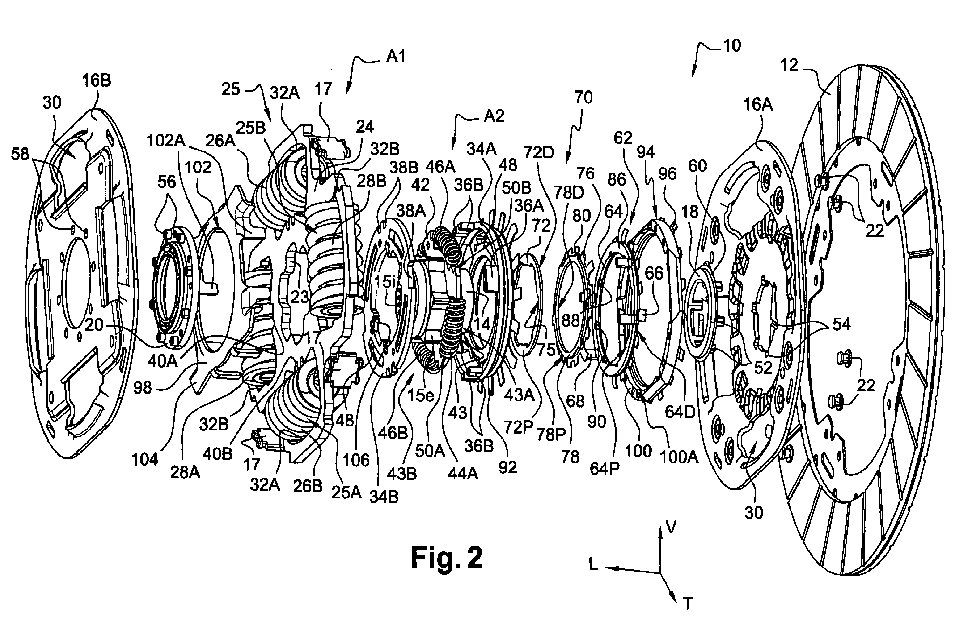

On a représenté partiellement sur les figures 1 et 2 un embrayage à friction 10, notamment destiné à équiper un véhicule automobile, selon un premier mode de réalisation de l'invention.

Bien entendu, l'embrayage à friction 10 décrit et représenté ne constitue qu'un exemple non limitatif du type d'embrayage à friction susceptible de recevoir application des enseignements de la présente invention.

De manière connue, l'embrayage à friction 10, qui comporte ici un axe principal X d'orientation longitudinale, est destiné à transmettre un couple entre un volant moteur solidaire en rotation d'un arbre menant, tel que le vilebrequin d'un moteur à combustion interne, et un arbre mené tel que l'arbre d'entrée d'une boîte de vitesses.

De préférence, l'embrayage à friction 10 est muni de moyens d'amortissement comportant un amortisseur principal A1 et un amortisseur secondaire A2, généralement appelé pré-amortisseur. Ces amortisseurs A1, A2 sont couplés en série entre un élément rotatif d'entrée générale, tel qu'un disque de friction 12, et un élément rotatif de sortie générale, tel qu'un moyeu interne 14, de forme générale annulaire, ces éléments d'entrée et de sortie étant sensiblement coaxiaux.

Le disque de friction 12 est destiné à être serré entre le volant moteur et un plateau de pression actionné par des moyens embrayeurs (non représentés). Le moyeu 14 comprend des cannelures longitudinales internes 15i permettant de le solidariser en rotation avec une extrémité de l'arbre mené (non représenté).

Chaque amortisseur A1, A2 est muni d'éléments rotatifs d'entrée et de sortie, un couple entrant par l'élément d'entrée étant transmis à l'élément de sortie après amortissement.

L'élément d'entrée de l'amortisseur principal A1 est l'élément d'entrée générale de l'embrayage à friction 10, c'est à dire le disque de friction 12.

L'amortisseur principal A1 comprend des première 16A et seconde 16B rondelles de guidage, solidarisées en rotation entre elles à l'aide de moyens conventionnels 17, tels que des colonnettes.

Ces rondelles de guidage 16A, 16B sont montées en rotation sur le moyeu 14 au moyen de paliers annulaires 18, 20 respectivement. Le disque de friction 12 est fixé sur la première rondelle de guidage 16A au moyen de rivets 22.

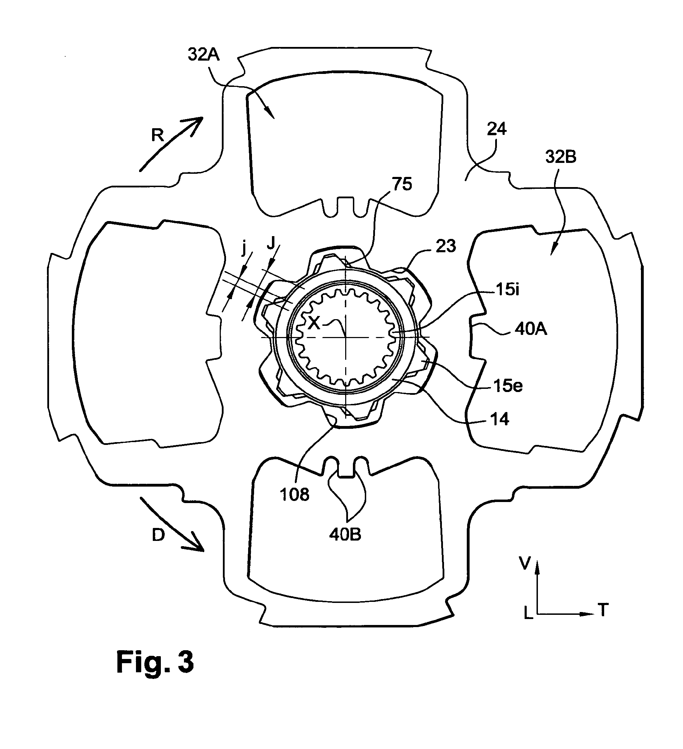

Un voile annulaire 24 est intercalé axialement entre les deux rondelles de guidage 16A, 16B, co-axialement à celles-ci. Ce voile annulaire 24 comporte, en périphérie interne, une denture 23 qui engrène, avec un jeu circonférentiel J déterminé (figure 3), avec une denture correspondante 15e de la périphérie externe du moyeu 14.

La denture interne 23 du voile 24 forme des saillies sensiblement radiales destinées à coopérer avec des évidements complémentaires externes du moyeu 14 de manière à réaliser un engrènement.

L'amortisseur principal A1 comporte également des moyens d'amortissement 25 destinés à amortir des vibrations en provenance du moteur.

De préférence, les moyens d'amortissement 25 comportent, d'une part, des moyens 25A d'amortissement à activation, dite immédiate, qui sont activés dès que débute le débattement angulaire entre les rondelles de guidage 16A, 16B et le voile 24, et, d'autre part, des moyens 25B d'amortissement à activation, dite conditionnelle, qui sont activés ici lorsque le débattement angulaire entre les rondelles de guidage 16A, 16B et le voile annulaire 24 dépasse un angle seuil prédéterminé à partir d'une position de repos, dit angle seuil d'amortisseur principal A1.

Les moyens d'amortissement 25A, 25B comportent des organes élastiques à action circonférentielle, tels que des ressorts hélicoïdaux 26A, 26B, 28A, 28B de forte raideur, logés dans des fenêtres 30 des rondelles de guidage 16A, 16B et dans des fenêtres 32A et 32B du voile annulaire 24. Les organes élastiques 26A, 26B, 28A, 28B sont répartis en deux groupes.

Les moyens d'amortissement à activation immédiate 25A comportent des organes élastiques 26A, 26B d'un premier groupe, dits organes élastiques à activation immédiate, logés sans jeu circonférentiel dans les fenêtres 30 des rondelles de guidage 16A, 16B et dans les fenêtres 32A du voile annulaire 24. Ils participent à la transmission d'un couple de rotation entre les rondelles de guidage 16A, 16B et le voile 24 dès le début d'une rotation relative entre le disque de friction 12 fixé sur la première rondelle de guidage 16A de l'amortisseur A1 et le moyeu 14.

Les moyens d'amortissement à activation conditionnelle 25B comportent des organes élastiques 28A, 28B d'un second groupe, dits organes élastiques à activation conditionnelle, logés sans jeu circonférentiel dans les fenêtres 30 des rondelles de guidage 16A, 16B et avec un jeu circonférentiel prédéterminé dans les fenêtres 32B du voile annulaire 24.

Les organes élastiques 28A, 28B du second groupe sont ici activés de façon décalée pour assurer la transmission d'un couple de rotation que lorsque le débattement angulaire entre les rondelles de guidage 16A, 16B et le voile annulaire 24 dépasse l'angle seuil d'amortisseur principal A1. On notera que cet angle seuil d'amortisseur principal A1 correspond au jeu circonférentiel entre les organes élastiques 28A, 28B et les fenêtres 32B correspondantes du voile 24.

Ainsi les organes élastiques 26A, 26B du premier groupe sont activés de façon immédiate pour transmettre le couple en permanence, tandis que les organes élastiques 28A, 28B du second groupe sont activés de façon conditionnelle pour transmettre le couple uniquement lorsque le débattement angulaire entre les rondelles de guidage 16A, 16B et le voile annulaire 24 est, ici, supérieur à l'angle seuil d'amortisseur principal A1.

L'amortisseur secondaire ou pré-amortisseur A2 relie le voile annulaire 24 de l'amortisseur principal A1 et le moyeu 14.

Le pré-amortisseur A2 comprend des première 34A et seconde 34B rondelles de guidage. Ces rondelles de guidage 34A, 34B sont solidarisées en rotation avec le voile 24 et accrochées sur ce voile 24 à l'aide de pattes axiales 36 ménagées à la périphérie de la première rondelle de guidage 34A.

Avantageusement, la rondelle de guidage 34A comporte deux types de pattes axiales 36, respectivement une première paire de pattes 36A et une seconde paire de pattes 36B, qui constituent des moyens détrompeurs destinés à garantir, lors du montage, un positionnement correct du moyeu 14 par rapport au voile principal 24.

En effet, les pattes 36A et 36B sont emboîtées dans des encoches complémentaires 38A, 38B et 40A, 40B qui, destinées à permettre la solidarisation en rotation, sont ménagées respectivement sur les contours de la seconde rondelle de guidage 34B et des fenêtres 32A, 32B du voile 24.

Par ailleurs, les extrémités libres des pattes 36A et 36B coopèrent par exemple par encliquetage avec les contours des fenêtres 32A, 32B pour solidariser axialement les première 34A et seconde 34B rondelles de guidage au voile 24 de l'amortisseur principal A1.

De préférence, chaque patte 36A de la première paire est réalisée sous la forme d'une seule patte dite large tandis que chaque patte 36B de la seconde paire est réalisée sous la forme d'une patte dite double de sorte que chacune des encoches 38 et 40 présente un profil complémentaire qui est différent selon que ladite encoche 38, 40 est destinée à être associée à une patte 36A de la première paire ou à une patte 36B de la deuxième paire.

Comme le voir sur la figure 2 et plus particulièrement sur la figure 3 pour le voile principal 24, les encoches 38A de la rondelle de guidage 34B et les encoches 40A du voile 24 qui sont respectivement associées aux pattes larges 36A présentent un profil complémentaire en "U" tandis que les encoches 38B de la rondelle de guidage 34B et les encoches 40B du voile 24 qui sont respectivement associées aux pattes doubles 36B présentent un profil complémentaire en "W".

Il n'est ainsi pas possible à une patte large 36A d'être introduite dans une encoche 38B ou 40B en "W", elle ne peut l'être que dans une encoche 38A, 40A associée ce qui assure la fonction de détrompeur.

Dans le mode de réalisation représenté, les rondelles de guidage 34A, 34B sont de préférence réalisées en matière plastique, laquelle est éventuellement renforcée de fibres.

Un voile annulaire 42 de pré-amortisseur est intercalé axialement entre les deux rondelles de guidage 34A, 34B, co-axialement à celles-ci. Ce voile annulaire 42 est solidaire en rotation du moyeu 14, par exemple par engrènement sans jeu avec la denture périphérique externe 15e de ce moyeu 14.

On notera que les pattes 36A, 36B coopérant avec les encoches 38A, 38B, 40A, 40B enjambent le voile 42 sans gêner le mouvement relatif entre les rondelles de guidage 34A, 34B et le voile 42.

Le pré-amortisseur A2 comporte également des moyens d'amortissement 43 destinés à amortir des vibrations en provenance du moteur.

Les moyens d'amortissement 43 du pré-amortisseur A2 comportent d'une part des moyens 43A d'amortissement à activation, dite immédiate, qui sont activés dès que débute le débattement angulaire entre les rondelles de guidage 34A, 34B et le voile 42 du pré-amortisseur A2, et, d'autre part, des moyens 43B d'amortissement à activation, dite conditionnelle, qui sont activés, ici, lorsque le débattement angulaire entre les rondelles de guidage 34A, 34B et le voile annulaire 42 du pré-amortisseur A2 dépasse un angle seuil prédéterminé à partir d'une position de repos, dit angle seuil de pré-amortisseur A2.

Les moyens d'amortissement 43A, 43B comportent des organes élastiques à action circonférentielle, tels que des ressorts hélicoïdaux 44A, 44B, 46A, 46B de raideur relativement faible, logés dans des fenêtres 48 des rondelles de guidage 34A, 34B et dans des fenêtres 50A, 50B du voile annulaire 42 (voir figure 10). De façon analogue à l'amortisseur principal A1, les organes élastiques 44A, 44B, 46A, 46B sont répartis en deux groupes.

Les moyens d'amortissement à activation immédiate 43A comportent des organes élastiques 44A, 44B d'un premier groupe, dits organes élastiques à activation immédiate, logés sans jeu circonférentiel dans les fenêtres 48, 50A. Ils participent à la transmission d'un couple de rotation entre les rondelles de guidage 34A, 34B et le voile 42, dès le début d'une rotation relative entre ces rondelles de guidage 34A, 34B et ce voile 42.

Les moyens d'amortissement à activation conditionnelle 43B comportent des organes élastiques 46A, 46B d'un second groupe, dits organes élastiques à activation conditionnelle, logés sans jeu circonférentiel dans les fenêtres 48 des rondelles de guidage 34A, 34B et avec un jeu circonférentiel prédéterminé dans les fenêtres 50B du voile annulaire 42.

Les organes élastiques 46A, 46B du second groupe sont activés de façon conditionnelle pour assurer la transmission d'un couple de rotation que lorsque le débattement angulaire entre les rondelles de guidage 34A, 34B et le voile annulaire 42 du pré-amortisseur A2 dépasse l'angle seuil de pré-amortisseur A2.

On notera que cet angle seuil de pré-amortisseur A2 correspond au jeu circonférentiel entre les organes élastiques 46A, 46B du second groupe et les fenêtres 50B correspondantes du voile 42.

Ainsi, les organes élastiques 44A, 44B du premier groupe sont activés de façon immédiate pour transmettre le couple en permanence, tandis que les organes élastiques 46A, 46B du second groupe sont activés de façon décalée pour transmettre le couple uniquement lorsque le débattement angulaire entre les rondelles de guidage 34A, 34B et le voile annulaire 42 est supérieur à l'angle seuil de pré-amortisseur A2.

Avantageusement, l'ensemble des organes élastiques 26A, 26B, 28A, 28B, 44A, 44B, 46A, 46B de l'amortisseur principal A1 et du pré-amortisseur A2 permet donc d'obtenir quatre étages d'amortissement des vibrations et des irrégularités de couple.

En effet, les organes élastiques 44A, 44B, 46A, 46B du pré-amortisseur A2 déterminent des premier et deuxième étages d'amortissement selon qu'ils sont montés sans ou avec jeu circonférentiel dans leurs fenêtres correspondantes.

Par ailleurs, en fin de course du pré-amortisseur A2, les organes élastiques 26A, 26B, 28A, 28B de l'amortisseur principal A1 déterminent des troisième et quatrième étages d'amortissement selon qu'ils sont montés sans ou avec jeu circonférentiel dans leurs fenêtres correspondantes.

A chaque étage d'amortissement sont associés des moyens de frottement, dits d'hystérésis, qui sont destinés à dissiper l'énergie accumulée dans chacun des organes élastiques 26A, 26B, 28A, 28B de l'amortisseur principal A1 et dans chacun des organes élastiques 44A, 44B, 46A, 46B du pré-amortisseur A2, de manière a assurer une fonction de filtration des vibrations en évitant par exemple des phénomènes, tels que le "creeping".

Ainsi, le pré-amortisseur A2 comporte respectivement des premiers et deuxièmes moyens d'hystérésis, et l'amortisseur A1 principal comporte respectivement des troisièmes et quatrièmes moyens d'hystérésis.

Les premiers moyens d'hystérésis associés au pré-amortisseur A2 comprennent des surfaces de frottement portées par le moyeu 14 et les paliers 18, 20.

Le palier 18 est solidarisé en rotation avec la première rondelle de guidage 16A de l'amortisseur principal A1 à l'aide de moyens classiques, par exemple des doigts axiaux 52 coopérant par encliquetage avec un contour interne cranté complémentaire 54 de la rondelle de guidage 16A.

Le palier 20, participant au centrage de la seconde rondelle de guidage 16B de l'amortisseur principal A1, est solidarisé en rotation avec cette rondelle de guidage 16B à l'aide de moyens classiques, par exemple des doigts axiaux 56 emboîtés dans des orifices complémentaires 58 de la rondelle de guidage 16B.

Deux surfaces de frottement complémentaires radiales F1, F1' sont portées respectivement par le palier 18 et un épaulement 59 du moyeu 14.

Deux surfaces de frottement complémentaires tronconiques G1, G1' sont portées respectivement par le palier 20 et le moyeu 14.

Les surfaces de frottement complémentaires F1, F1', G1, G1' sont sollicitées élastiquement en contact mutuel par une rondelle élastique 60 de compression axiale en appui entre la première rondelle de guidage 16A de l'amortisseur principal A1 et le palier 18.

La rondelle élastique 60, de préférence en acier à ressort, est solidarisée en rotation avec la première rondelle de guidage 16A de l'amortisseur principal A1 à l'aide de moyens classiques, par exemple par coopération de pattes et encoches complémentaires.

Dans le mode de réalisation représenté, les paliers 18 et 20 sont en matière plastique, éventuellement renforcée de fibres, et exercent de préférence un frottement relativement « doux » sur le moyeu 14.

Les deuxièmes moyens d'hystérésis associés au pré-amortisseur A2 sont activés de façon décalée par rapport aux premiers moyens d'hystérésis.

Ces deuxièmes moyens d'hystérésis forment un système de frottement à hystérésis variable 62, dit système d'hystérésis.

Avantageusement, le système d'hystérésis 62 du pré-amortisseur A2 comporte des moyens d'hystérésis à activation conditionnelle qui sont agencés entre le voile 42 du pré-amortisseur A2 et la première rondelle principale de guidage 16A de l'amortisseur A1, plus précisément entre la première rondelle de guidage 34A du pré-amortisseur A2 et la première rondelle principale de guidage 16A de l'amortisseur A1.

Dans la description qui suit des faces ou surfaces de frottement, une face ou une surface est dite « proximale » lorsqu'elle est orientée vers du voile 24 et, à contrario, est dite « distale » lorsque elle est orientée à l'opposé vers la rondelle de guidage 16A.

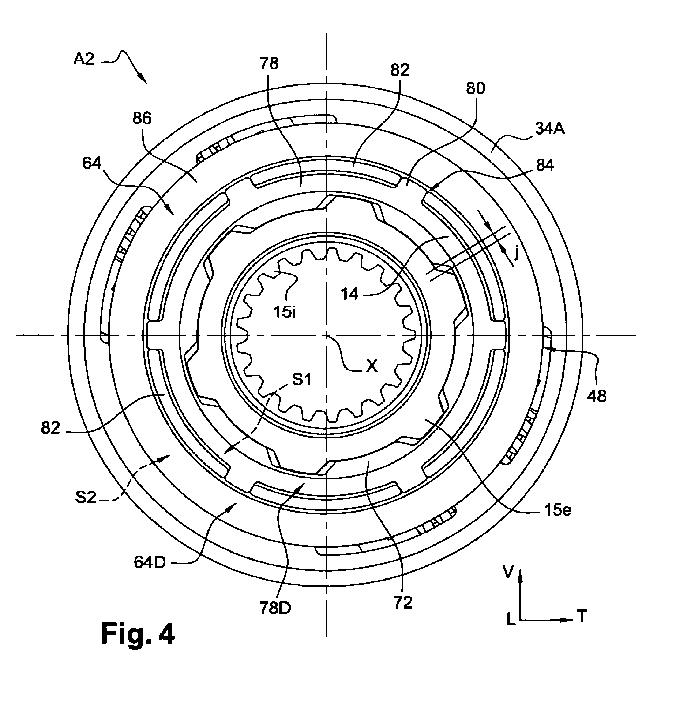

On décrira ci-après selon le premier mode de réalisation représenté sur les figures 1 et 2, le pré-amortisseur A2 qui est plus particulièrement détaillé aux figures 4 à 6.

Selon un exemple de réalisation préféré du système d'hystérésis 62, les moyens d'hystérésis à activation conditionnelle du système 62 comportent au moins une rondelle d'hystérésis variable 64 et une rondelle élastique d'application 66.

La rondelle d'hystérésis 64 comporte respectivement une face proximale 64P formant une surface de frottement et une face distale 64D formant une autre surface de frottement, la face distale de frottement 64D étant destinée à coopérer avec une surface de frottement complémentaire formée par une face 66P qui est portée par la rondelle élastique d'application 66 du système d'hystérésis 62.

Avantageusement, la rondelle d'hystérésis variable 64 comporte pour son activation au moins une patte d'activation 68 qui est liée angulairement avec un organe élastique 46A, 46B correspondant et qui sera décrite plus détail ultérieurement.

Conformément à l'invention, l'embrayage à friction 10 comporte un système de frottement à tiroir 70 comportant au moins une rondelle de frottement 72, dite rondelle tiroir, dans lequel la rondelle tiroir 72 comporte des moyens d'entraînement 74 destinés à entraîner en rotation la rondelle tiroir 72 avec un jeu circonférentiel "j" inférieur au jeu circonférentiel "J" précité entre la denture externe 15e du moyeu 14 et la denture interne 23 du voile 24 de l'amortisseur A1.

Selon l'invention, la rondelle tiroir 72 est interposée axialement entre la première rondelle de guidage 34A du pré-amortisseur A2 et une rondelle élastique de charge 76 associée, la rondelle élastique de charge 76 étant destinée à solliciter la rondelle tiroir 72 avec une force élastique axiale déterminée de manière à constituer un système de frottement à tiroir 70 de type indépendant.

Avantageusement, le système de frottement à tiroir 70 est apte à réduire les bruits indésirables provoqués par les chocs entre lesdites dentures 15e et 23.

La rondelle tiroir 72 comporte respectivement une face distale de frottement 72D qui est destinée à coopérer avec une face proximale de frottement associée et une face proximale de frottement 72P qui est destinée à coopérer avec une première surface de frottement S1 portée par la face distale 34D de la première rondelle de guidage 34A du pré-amortisseur A2.

De préférence, le système de frottement à tiroir 70 comporte une rondelle intermédiaire de frottement 78 est interposée axialement entre la rondelle tiroir 72 et la rondelle élastique de charge 76. La rondelle intermédiaire de frottement 78 est libre de se déplacer axialement et est liée en rotation sans jeu par des moyens de liaison 80, tels que des pattes radiales, à la première rondelle de guidage 34A du pré-amortisseur A2.

Avantageusement, ladite face proximale de frottement destinée à coopérer avec la face distale de frottement 72D de la rondelle tiroir 72 est donc portée par la rondelle intermédiaire de frottement 78 et constituée par une face proximale de frottement 78P de cette rondelle.

Ainsi, la rondelle intermédiaire de frottement 78 comporte respectivement une face proximale de frottement 78P destinée à coopérer avec la face distale de frottement 72D de la rondelle tiroir 72 et une face distale de frottement 78D destinée à coopérer avec une face proximale de frottement 76P portée par la rondelle élastique de charge 76 du système de frottement à tiroir 70.

En variante non représentée, le système de frottement à tiroir 70 ne comporte pas une telle rondelle intermédiaire de frottement 78 de sorte que la rondelle élastique de charge 76 coopère directement par une face proximale 76P avec la face distale 72D de frottement de la rondelle tiroir 72.

Selon cette variante, la face proximale de frottement destinée à coopérer avec la face distale de frottement 72D de la rondelle tiroir 72 est donc alors portée par la rondelle élastique de charge 76 du système de frottement à tiroir 70 et est constituée par la face proximale de frottement 76P de la rondelle élastique de charge 76.

La rondelle d'hystérésis 64 de l'embrayage à friction 10 comporte respectivement une face proximale de frottement 64P et une face distale de frottement 64D, la face distale de frottement 64D étant destinée à coopérer avec une face proximale de frottement 66P portée par la rondelle élastique d'application 66 et la face proximale de frottement 64D étant destinée à coopérer avec une deuxième surface de frottement S2 portée par la face distale 34D de la première rondelle de guidage 34A du pré-amortisseur A2.

Avantageusement, la première surface de frottement S1 associée à la rondelle tiroir 72 est disposée radialement à l'intérieur de la deuxième surface de frottement S2 associée à la rondelle d'hystérésis 64 de manière que la face distale 64D de la première rondelle de guidage 34A comporte des première et deuxième surfaces de frottement S1, S2 qui forment respectivement des première et deuxième pistes annulaires de frottement concentriques.

Avantageusement, la première rondelle de guidage 34A comporte un élément annulaire 82 qui s'étend axialement en saillie à partir de la face distale 64D et qui est agencé radialement entre lesdites première et deuxième surfaces de frottement S1, S2 concentriques.

Avantageusement, l'élément annulaire 82 comporte des moyens d'entraînement 84 destinés à coopérer avec les moyens de liaison 80 de la rondelle intermédiaire de frottement 78 de manière que la première rondelle de guidage 34A soit apte à entraîner en rotation, sans jeu circonférentiel, la rondelle intermédiaire de frottement 78, tout en laissant ladite rondelle intermédiaire de frottement 78 axialement libre de mouvement par rapport à la rondelle de guidage 34A.

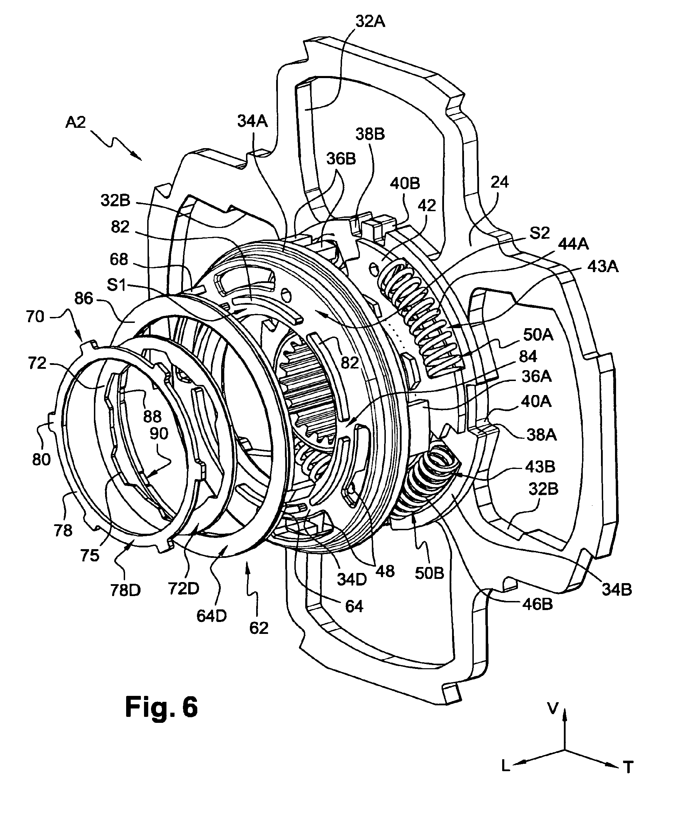

De préférence et tel qu'illustré par les figure 4 et 6, les moyens d'entraînement 84 sont constitués des ouvertures réalisées dans l'élément 82 qui forme une couronne s'étendant circonférentiellement de manière discontinue autour de l'axe X, les ouvertures 84 étant aptes à entraîner en rotation sans jeu les pattes 80 formant les moyens de liaison de la rondelle intermédiaire de frottement 78.

Avantageusement, la rondelle intermédiaire de frottement 78 et/ou la première rondelle de guidage 34A comportent des moyens (non représentés) destinés à assurer un montage imperdable de la rondelle intermédiaire de frottement 78 sur la première rondelle de guidage 34A, sans toutefois que ne soit entraver la possibilité de déplacement axial de la rondelle 78 par rapport à la rondelle de guidage 34A.

A titre d'exemple, les extrémités de deux éléments 82 consécutifs délimitant une ouverture 84 de passage des pattes radiales de liaison 80 sont susceptibles de comporter chacune un renflement s'étendant en saillie à travers vers l'ouverture vers le renflement en vis-à-vis de manière à créer axialement un rétrécissement ponctuel à l'entrée de chaque ouverture 84.

Grâce à de tels moyens, les rondelles tiroir 72 et intermédiaire de frottement 78 du système à tiroir 70 sont solidaires du pré-amortisseur A2 avec lequel elles forment un module unitaire pré-assemblé qui sera décrit plus en détail ultérieurement.

Dans le premier mode de réalisation, les moyens d'entraînement en rotation 74 de la rondelle tiroir 72 sont constitués par une denture interne 75 qui est apte à engrener avec la denture externe 15e du moyeu 14 avec un jeu circonférentiel j inférieur au jeu circonférentiel J précité entre la denture externe 15e du moyeu 14 et la denture interne 23 du voile 24 de l'amortisseur principal A1 (voir notamment la figure 3).

Avantageusement, la rondelle tiroir 72 est agencée radialement globalement en dessous de la rondelle d'hystérésis 64 de sorte que, lesdites rondelles 64, 72 étant globalement alignées suivant la direction radiale, le système de frottement à tiroir 70 et le système d'hystérésis variable 62 sont superposés selon l'orientation verticale.

Avantageusement, le système de frottement à tiroir 70 et le système d'hystérésis variable 62 présentent, entre la face proximale de la première rondelle principale de guidage 16A et la face distale 34D de la rondelle de guidage 34A portant les surfaces de frottement S1, S2, un encombrement axial similaire de manière que l'encombrement axial de l'embrayage à friction 10 n'est pas augmenté par l'intégration du système de frottement à tiroir 70.

Avantageusement, la rondelle tiroir 72 est soumise à une force élastique axiale développée par la rondelle élastique de charge 76 qui la sollicite en direction de la face distale 64D de la première rondelle de guidage 34A de manière que le système de frottement à tiroir 70 ainsi constitué est un système à tiroir indépendant qui, par définition, est caractérisé par le fait que la rondelle élastique de charge 76 soit dédiée et associée exclusivement à la rondelle tiroir 72.

Selon une variante de réalisation non représentée, lorsque le système de frottement à tiroir 70 ne comporte pas de rondelle intermédiaire de frottement 78, ni de rondelle tiroir 72 distincte, le système 70 est alors constitué uniquement par une rondelle élastique apte à assurer à la fois la fonction de frottement de la rondelle tiroir 72 et la fonction d'application d'une charge axiale contre la première surface de frottement S1 de la face distale 34D de la première rondelle de guidage 34A.

Une rondelle élastique multifonction selon cette variante est toutefois généralement plus encombrante axialement que l'association d'une rondelle tiroir 72 et d'une rondelle élastique de charge 76 respectivement.

Avantageusement, dans un tel système à tiroir 70 indépendant, la valeur de la charge axiale du système 70 est susceptible d'être déterminée de manière totalement indépendante, en particulier par rapport aux autres moyens de frottement et au système de frottement à hystérésis variable 62.

Grâce à l'agencement selon l'invention, il est possible de juxtaposer axialement au pré-amortisseur A2, un système de frottement à hystérésis variable 62 d'une part et un système de frottement à tiroir 70 d'autre part, lesdits systèmes 62 et 70 étant agencés radialement de manière superposée.

Avantageusement, le système de frottement à hystérésis variable 62 et le système de frottement à tiroir 70 forment avec le pré-amortisseur A2 un module pré-assemblé. Ainsi, le pré-amortisseur A2, le système de frottement à hystérésis variable 62 et le système de frottement à tiroir 70 sont susceptibles d'être intégrés dans l'embrayage à friction 10 avec un encombrement axial optimal.

Pour le système d'hystérésis 62, les surfaces de frottement sont portées, d'une part, par la face proximale 64P de la rondelle d'hystérésis 64 associée à la deuxième surface de frottement S2 que comporte radialement à l'extérieur la face distale 34D de la rondelle de guidage 34A et, d'autre part, par la face distale 64D de la rondelle d'hystérésis 64 associée à la face proximale 66P de la rondelle élastique d'application 66.

Pour le système à tiroir 70, les surfaces de frottement sont de préférence respectivement portées par la face proximale de frottement 72P de la rondelle tiroir 72 associée à la première surface de frottement S1 que comporte radialement à l'intérieur la face distale 34D de la rondelle de guidage 34A du pré-amortisseur A2 et la face distale de frottement 72D de la rondelle tiroir 72 associée à la face proximale 78P de frottement que comporte la rondelle intermédiaire de frottement 78.

Avantageusement, on détermine en fonction de l'application les matériaux appropriés à mettre en oeuvre pour la fabrication des différents éléments ou rondelles portant au moins une surface de frottement pour chacun des systèmes de frottement 62, 70.

De préférence, les matériaux sont principalement choisis parmi des matériaux métalliques, tels qu'une tôle en acier, et des matières plastiques, renforcées ou non par des fibres, de manière à obtenir, pour chaque système de frottement 62, 70, le type de frottement approprié.

On distingue par conséquent, en fonction des matériaux, différentes combinaisons ou types de frottement tels que par exemple acier/acier, acier/plastique, etc.

Dans le premier mode de réalisation des figures 1 à 6, on rappellera que la première rondelle de guidage 34A est de préférence réalisée en matière plastique, éventuellement renforcée de fibres.

De préférence, la rondelle élastique d'application 66 est métallique, par exemple réalisée en acier à ressort, et exerce un effort de compression axiale sur la rondelle d'hystérésis 64 du système d'hystérésis 62.

De préférence, la rondelle tiroir 72 est réalisée dans un matériau métallique, tel que de l'acier ou un matériau analogue.

De préférence, la rondelle intermédiaire de frottement 78, disposée axialement entre la rondelle tiroir 72 et la rondelle élastique de charge 76, est réalisée en matière plastique, éventuellement renforcée de fibres.

En variante, la rondelle intermédiaire de frottement 78 est réalisée dans un matériau métallique, tel que de l'acier ou un matériau analogue.

Par conséquent, la rondelle tiroir 72 présente du côté de sa face proximale 72P associée à la rondelle de guidage 34A un frottement de type plastique/acier et du côté de sa face distale 72D un frottement de type plastique/acier avec la face 78P de la rondelle intermédiaire 78.

Selon la variante de réalisation non représentée précitée, lorsque le système à tiroir 70 ne comporte pas de rondelle intermédiaire de frottement 78, la rondelle tiroir 72 présente alors, du côté de sa face proximale 72P associée à la rondelle de guidage 34A, un frottement de type plastique/acier et, du côté de sa face distale 72D associée avec la face 76P de la rondelle élastique de charge 76, un frottement de type acier/acier.

Selon le premier mode de réalisation, la rondelle d'hystérésis variable 64 est de préférence réalisée en un matériau métallique, tel que de l'acier ou un matériau analogue, et comporte au moins une rondelle de frottement 86 sur l'une de ses faces annulaires.

Plus précisément, la rondelle d'hystérésis 64 comporte une rondelle de frottement 86 rapportée de manière solidaire, ici sur sa face distale située en vis-à-vis de la rondelle élastique d'application 66 en acier. Avantageusement, cette rondelle de frottement 86 est fabriquée en matière plastique, éventuellement renforcée de fibres.

La face distale 64D formant la surface de frottement est donc portée par cette rondelle de frottement 86 en matière plastique qui est solidaire en rotation de la rondelle d'hystérésis variable 64 tandis que la face proximale 64P de frottement est portée directement par la rondelle d'hystérésis 64 en acier.

Ainsi, la rondelle d'hystérésis variable 64 présente du côté de sa face proximale 64P, associée à la deuxième surface de frottement S2 de la face distale 34D de la première rondelle de guidage 34A en matière plastique du pré-amortisseur A2, un frottement mixte de type plastique/acier et, du côté de sa face distale 64D, portée par la rondelle 86 et associée à la face 66P de la rondelle élastique 66, un autre frottement mixte de type plastique/acier.

Avantageusement, la rondelle de frottement 86 est solidarisée en rotation avec la rondelle d'hystérésis variable 64 par collage ou par coopération de formes, par exemple par l'intermédiaire d'ergots 88 qui coopèrent avec des encoches 90 complémentaires ménagées sur un contour interne de la rondelle d'hystérésis 64.

Avantageusement, on crée un frottement de type acier/plastique de chaque côté de la rondelle d'hystérésis variable 64.

Selon une variante de réalisation non représentée, la rondelle de frottement 86 est supprimée, le système d'hystérésis 62 diffère alors de celui-ci décrit précédemment en ce que le frottement intervenant entre la face distale 64D portée directement par la rondelle d'hystérésis 64 en acier et la face proximale 66P de la rondelle élastique d'application 66, est un frottement de type acier/acier.

Avantageusement, la rondelle d'hystérésis 64 est munie également, à sa périphérie externe, de deux paires de pattes 68 d'activation de cette rondelle 64. Les pattes d'activation 68 d'une même paire étant en prise avec une paire d'extrémités d'un organe élastique 46A, 46B correspondant lorsque celui-ci est au repos.

Lorsque le deuxième étage d'amortissement associé au pré-amortisseur A2 est activé, le jeu circonférentiel entre chaque organe élastique 46A, 46B et le contour d'une fenêtre 50B correspondante du voile 42 est annulé, si bien que le voile 42 vient en appui contre une des extrémités de l'organe élastique 46A, 46B pour comprimer cet organe élastique 46A, 46B.

Ainsi, la patte d'activation 68, en contact avec l'extrémité de l'organe élastique 46A, 46B coopérant avec le voile 42, se déplace conjointement avec cette extrémité et le voile 42 pour entraîner en rotation la rondelle d'hystérésis 64 en acier, avec ou sans rondelle de frottement 86 en plastique.

Deux surfaces de frottement complémentaires radiales F2, F2' sont portées respectivement par la rondelle d'hystérésis 64 et la première rondelle de guidage 34A du pré-amortisseur A2 de façon à créer un frottement de type plastique/acier.

Deux surfaces de frottement complémentaires radiales G2, G2' sont portées respectivement par la rondelle élastique d'application 66 en acier et la rondelle de frottement 86 en plastique qui est solidaire de la rondelle d'hystérésis 64 de façon à créer un frottement mixte de type plastique/acier.

Les surfaces de frottement complémentaires F2, F2', G2, G2' sont sollicitées élastiquement en contact mutuel par la rondelle élastique 66.

En effet, la rondelle élastique d'application 66 est montée en appui entre la première rondelle de guidage 16A de l'amortisseur principal A1 et la face distale 64D de la rondelle d'hystérésis 64, portée ici par la rondelle de frottement 86

De préférence, la rondelle élastique 66 est solidarisée en rotation avec la rondelle de guidage 16A de l'amortisseur principal A1 à l'aide de moyens classiques, par exemple par coopération de formes entre pattes radiales et des encoches complémentaires.

Avantageusement, chaque patte 68 est venue de matière avec la rondelle 64 et chaque patte 68 est délimitée par des surfaces de contact avec l'organe élastique 46A, 46B correspondant et avec le voile 42, lesdites surfaces étant formées par la tranche de chaque patte 68 portée par la rondelle 64 en tôle d'acier.

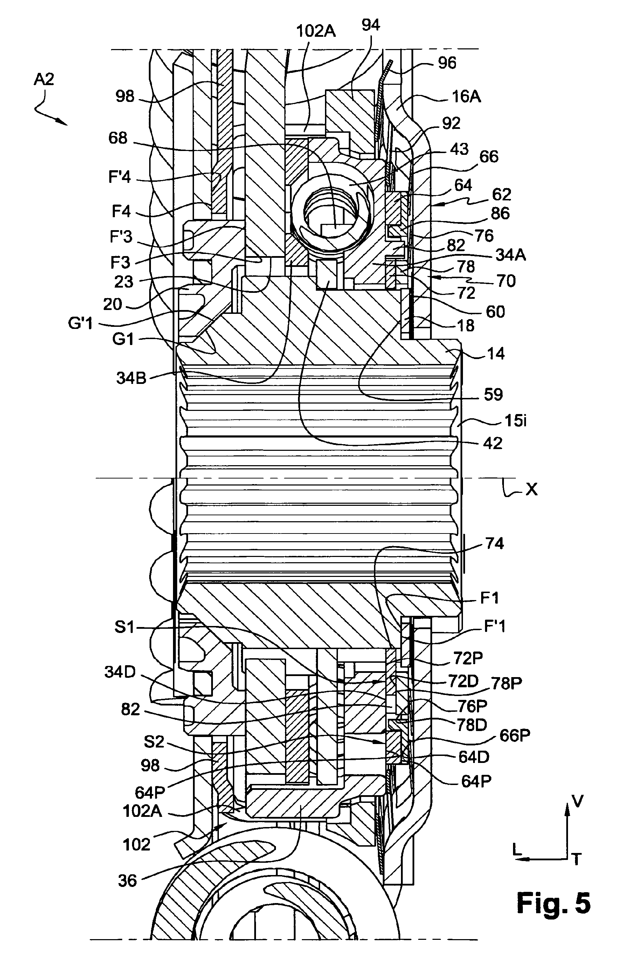

En outre, chaque patte 68 est repliée axialement de façon à traverser la première rondelle de guidage 34A du pré-amortisseur A2 (voir figure 5). En variante, les pattes 68 pourraient enjamber la première rondelle de guidage 34A du pré-amortisseur A2.

Avantageusement, la surface de contact avec l'organe élastique 46A, 46B de chaque patte d'activation 68 comprend des moyens d'encliquetage (non représentés) destinés à coopérer avec un organe élastique à activation conditionnelle 46A, 46B correspondant afin d'accrocher la rondelle d'hystérésis 64 sur le pré-amortisseur A2.

De préférence, les moyens d'encliquetage comportent un ergot qui, venu de matière avec la patte d'activation 68, est destiné à coopérer avec une extrémité de l'organe élastique à activation conditionnelle 46A, 46B correspondant.

Un tel ergot est par exemple disposé à une extrémité libre de la patte d'activation 68. En variante, l'ergot est globalement centré, c'est-à-dire disposé entre ladite extrémité libre et une extrémité de liaison qui, opposée axialement, assure la liaison de la patte 68 avec la partie annulaire de la rondelle d'hystérésis 64.

Grâce à de tels moyens d'accrochage ou d'encliquetage, la rondelle d'hystérésis 64 est susceptible, comme le système à tiroir 70 avec la rondelle intermédiaire de frottement 78, d'être montée de manière imperdable avec le pré-amortisseur A2 afin d'obtenir un module pré-assemblé qui constitue un sous-ensemble unitaire.

Avantageusement, en plus de remplir les fonctions décrites précédemment, la rondelle de frottement à hystérésis variable 64 simplifie donc le montage du dispositif à friction 10.

En effet, lorsque les pattes 68 de la rondelle de frottement 64 sont encliquetées dans les organes élastiques 46A, 46B et les pattes 80 de la rondelle intermédiaire de frottement 78 montées dans les ouvertures 84 de la rondelle de guidage 34A, le pré-amortisseur A2, le système d'hystérésis 62 et le système à tiroir 70 forment alors un module pré-assemblé, encore appelé "cassette", pouvant avantageusement être monté en une seule opération sur le dispositif à friction 10.

De préférence, le module pré-assemblé comporte également le voile 24 de l'amortisseur principal A1, sur lequel sont fixées des rondelles de guidage 34A, 34B du pré-amortisseur A2.

De préférence, le module unitaire pré-assemblé comporte donc au moins les rondelles de guidage 34A, 34B, le voile 42 du pré-amortisseur A2, les moyens d'amortissement 43A, 43B comportant au moins un organe élastique 46A, 46B à activation conditionnelle et concentriquement de part et d'autre de l'élément 82, la rondelle tiroir 72 et la rondelle intermédiaire de frottement 78 du système 70 qui sont agencées radialement à l'intérieur et la rondelle d'hystérésis 64 qui est agencée radialement à l'extérieur

Avantageusement, la rondelle d'hystérésis 64 est encliquetée sur chaque organe élastique 46A, 46B à activation conditionnelle du pré-amortisseur A2 et les pattes de liaison 80 de la rondelle intermédiaire de frottement 78 coopèrent avec les ouvertures 84 et sont montées de manière à obtenir un tel module pré-assemblé.

Les troisièmes moyens d'hystérésis associés à l'amortisseur principal A1 comprennent des surfaces de frottement portées par le palier 20, le voile 24 de l'amortisseur principal A1, la première rondelle de guidage 34A du pré-amortisseur A2 et une rondelle élastique 92 de compression axiale, de préférence en acier à ressort.

Comme illustré sur les figures 1 et 2, deux surfaces de frottement complémentaires radiales F3, F3' sont portées respectivement par le palier 20 et le voile 24 de l'amortisseur principal A1. Comme déjà précisé ci-dessus, le palier 20 est solidaire en rotation de la rondelle de guidage 16B.

On notera que le palier 20 est un organe de frottement commun aux moyens d'hystérésis 62 à activation immédiate du pré-amortisseur A2 (premier étage) et aux moyens d'hystérésis à activation immédiate de l'amortisseur principal A1 (troisième étage).

Deux surfaces de frottement complémentaires radiales G3, G3' sont portées respectivement par la rondelle de guidage 34A du pré-amortisseur A2 et la rondelle élastique 92.

Les surfaces de frottement complémentaires F3, F3', G3, G3' sont sollicitées élastiquement en contact mutuel par la rondelle élastique 92. En effet, la rondelle élastique 92 est montée en appui entre la première rondelle de guidage 16A de l'amortisseur principal A1 et la périphérie radiale externe de la première rondelle de guidage 34A du pré-amortisseur A2.

La rondelle élastique 92 est solidarisée en rotation avec la rondelle de guidage 16A de l'amortisseur principal A1 à l'aide de moyens classiques, par exemple par coopération de pattes radiales et encoches complémentaires.

Les quatrièmes moyens d'hystérésis associés à l'amortisseur principal A1 sont activés de façon conditionnelle par rapport aux troisièmes moyens d'hystérésis.

Comme illustré sur les figures 1 et 2, ces quatrièmes moyens d'hystérésis comprennent des surfaces de frottement portées par la seconde rondelle de guidage 16B de l'amortisseur principal A1, un organe de frottement 94 et une rondelle élastique 96 de compression axiale, de préférence en acier à ressort.

L'organe de frottement 94 comprend des première 98 et seconde 100 rondelles de frottement coaxiales, sensiblement planes, qui sont fabriquées respectivement en tôle métallique et en matière plastique.

La première rondelle de frottement 98 est intercalée axialement entre la seconde rondelle de guidage 16B et le voile annulaire 24 de l'amortisseur principal A1, et entoure le palier 20. La seconde rondelle de frottement 100 est intercalée axialement entre le voile annulaire 24 de l'amortisseur principal A1 et la rondelle élastique 96, et entoure la première rondelle de guidage 34A du pré-amortisseur A2.

On notera que des moyens d'entretoisement 102 sont agencés entre la première rondelle de frottement 98 et la seconde rondelle de frottement 100. Ces moyens d'entretoisement 102 ménagent un dégagement axial entre deux faces en vis à vis de la première rondelle de frottement 98 et du voile 24 de l'amortisseur principal A1. Ainsi, la première rondelle de frottement 98 comporte une surface libre en regard du voile 24, qui n'est sujette à aucun frottement.

La première rondelle de frottement 98 ne subit alors des frottements qu'avec la rondelle de guidage 16B, et uniquement lorsque les moyens d'amortissement 25B à activation conditionnelle de l'amortisseur principal A1 sont activés.

De préférence, les moyens d'entretoisement 102 comportent des pattes axiales d'entretoisement 102A, venues de matière avec la première rondelle de frottement 98, et munies chacune d'une extrémité de liaison avec la première rondelle de frottement 98 et d'une extrémité libre de coopération avec la seconde rondelle de frottement 100.

Les rondelles de frottement 98, 100 sont solidarisées en rotation l'une avec l'autre à l'aide des pattes axiales d'entretoisement 102A. En effet, l'extrémité libre de coopération de chacune de ces pattes d'entretoisement 102A est emboîtée dans un orifice complémentaire 100A, ménagé dans la seconde rondelle de frottement 100.

La première rondelle de frottement 98 comporte par exemple huit pattes d'entretoisement 102A disposées circonférentiellement de manière régulière sur tout le contour de cette première rondelle de frottement 98 afin d'optimiser la solidarisation en rotation des rondelles de frottement 98, 100.

On notera que les pattes d'entretoisement 102A enjambent le voile 24 sans gêner le mouvement relatif entre les rondelles de guidage 16A, 16B et le voile 24.

Comme illustré à la figure 2, la première rondelle de frottement 98 est munie également de deux paires de pattes 104 d'activation de cette rondelle 98, venues de matière avec la première rondelle de frottement 98. Les pattes d'activation 104 d'une paire sont liées angulairement avec les extrémités d'un organe élastique 28A, 28B correspondant lorsque celui-ci est au repos.

Chaque patte d'activation 104 est délimitée par une surface de contact avec l'organe élastique 28A, 28B correspondant. Plus particulièrement, chaque patte d'activation 104 comporte un siège pour l'organe élastique 28A, 28B correspondant délimité par la surface de contact.

Le siège et au moins l'une des pattes d'entretoisement 102A sont formés par un même bord tombé de la rondelle de frottement 98, délimité par une ligne de pliage continue.

Lorsque le quatrième étage d'amortissement associé à l'amortisseur principal A1 est activé, le jeu circonférentiel entre chaque organe élastique 28A, 28B et le contour d'une fenêtre 32 correspondante du voile 24 est annulé, si bien que le voile 24 vient en appui contre une des extrémités de l'organe élastique 28A, 28B pour comprimer cet organe élastique 28A, 28B. Ainsi, la patte d'activation 104, en contact avec l'extrémité de l'organe élastique 28A, 28B coopérant avec le voile 24, se déplace conjointement avec cette extrémité et le voile 24 pour entraîner en rotation la première rondelle de frottement 98 et donc la seconde rondelle de frottement 100.

Deux surfaces de frottement complémentaires radiales F4, F4' sont portées par la seconde rondelle de guidage 16B et la première rondelle de frottement 98.

Deux surfaces de frottement complémentaires radiales G4, G'4 sont portées par la seconde rondelle de frottement 100 et la rondelle élastique 96.

Les surfaces de frottement complémentaires F4, F4', G4, G4' sont sollicitées élastiquement en contact mutuel par la rondelle élastique 96. En effet, la rondelle élastique 96 est montée en appui entre la première rondelle de guidage 16A de l'amortisseur principal A1 et l'organe de frottement 94, plus particulièrement la seconde rondelle de frottement 100.

La rondelle élastique 96 est solidarisée en rotation avec la rondelle de guidage 16A de l'amortisseur principal A1 à l'aide de moyens classiques, par exemple par coopération de pattes radiales et encoches complémentaires.

On décrira ci-dessous les principaux aspects du fonctionnement de l'embrayage à friction 10 illustré sur les figures 1 et 2 qui est équipé d'un pré-amortisseur A2 et de systèmes de frottement 6 et 70 selon le premier mode de réalisation de l'invention détaillé aux figures 3 à 6.

Lorsque le moteur du véhicule automobile fonctionne à un régime de ralenti, l'amortisseur principal A1 se comporte comme un organe rigide en raison de la raideur relativement élevée de ses organes élastiques 44A, 44B, 46A, 46B. Dans ce cas, le couple de rotation fourni par le vilebrequin du moteur est directement transmis du disque de friction 12 au voile annulaire 24 de l'amortisseur principal A1.

Les rondelles de guidage 34A, 34B étant solidaires en rotation du voile 24 de l'amortisseur principal A1, le couple de rotation est également transmis aux rondelles de guidage 34A, 34B.

Le couple de rotation est alors transmis de ces rondelles de guidage 34A, 34B au voile annulaire 42 du pré-amortisseur A2, et donc au moyeu 14, par l'intermédiaire des organe élastiques 44A, 44B, 46A, 46B.

Les vibrations et irrégularités de couple sont amorties dans un premier temps par les organes élastiques à activation immédiate 44A, 44B du pré-amortisseur A2 et par les premiers moyens de frottement à activation immédiate associés au pré-amortisseur A2, c'est-à-dire les surfaces de frottement F1, F'1, G1, G'1.

Dans l'exemple de réalisation illustré, lorsque le débattement angulaire entre les rondelles de guidage 34A, 34B et le voile annulaire 42 du pré-amortisseur A2 dépasse l'angle seuil de pré-amortisseur A2, les vibrations et irrégularités sont également amorties par les organes élastiques à activation conditionnelle 46A, 46B du pré-amortisseur A2 et par les seconds moyens de frottements à activation conditionnelle associés au pré-amortisseur A2, c'est-à-dire les surfaces de frottement F2, F'2, G2 et G'2.

Le voile annulaire 24 comporte à sa périphérie radialement interne la denture interne 23 qui engrène, avec un jeu circonférentiel "J" donné, avec la denture externe 15e correspondante du moyeu 14. La denture interne 23 du voile 24 forme des saillies sensiblement radiales destinées à coopérer avec des évidements complémentaires externes du moyeu 14.

Lorsque le débattement angulaire entre le voile 42 du pré-amortisseur A2 et les rondelles de guidage 34A, 34B est égal au jeu circonférentiel J prédéterminé entre le voile 24 et le moyeu 14, le voile 24 et le moyeu 14 coopèrent entre eux par butée. Dans ce cas, le pré-amortisseur A2 n'intervient plus dans la transmission du couple qui est directement transmis du voile 24 de l'amortisseur principal A1 au moyeu 14.

Par conséquent, le couple est alors uniquement transmis du disque de friction 12 au moyeu 14 par l'intermédiaire de l'amortisseur principal A1.

Les vibrations et irrégularités du couple sont amorties dans un premier temps par les organes élastiques 26A, 26B à activation immédiate de l'amortisseur principal A1 et par les troisièmes moyens de frottement à activation immédiate associés à l'amortisseur principal A1, c'est-à-dire les surfaces de frottement F3, F3', G3 et G'3.

Lorsque le débattement angulaire entre les rondelles de guidage 16A, 16B et le voile annulaire 24 de l'amortisseur principal A1 dépasse l'angle seuil de l'amortisseur principal A1, les vibrations et irrégularités sont également amorties par les organes élastiques à activation conditionnelle 28A, 28B de l'amortisseur principal A1 et par les quatrièmes moyens de frottement à activation conditionnelle associés à l'amortisseur principal A1, c'est-à-dire les surfaces de frottement F4, F'4, G4, G'4.

Avantageusement, on obtient ainsi quatre étages d'amortissement, qui s'activent successivement en fonction du débattement angulaire entre le disque de friction 12 et le moyeu 14.

Dans une variante de réalisation non représentée de l'invention qui vient d'être décrite, les vibrations et irrégularités sont également amorties par les organes élastiques à activation conditionnelle 46A, 46B du pré-amortisseur A2 et par les seconds moyens de frottements à activation conditionnelle (surfaces F2, F'2, G2 et G'2) associés au pré-amortisseur A2, lorsque le débattement angulaire entre les rondelles de guidage 34A, 34B et le voile 42 du pré-amortisseur A2 s'effectue selon l'un ou l'autre des sens de rotation illustrés par les flèches R et D à la figure 3 et correspondant respectivement par au sens rétrograde dit "rétro" et au sens de rotation "direct" lequel est opposé au sens "rétro".

Dans une variante de réalisation non représentée de l'invention qui vient d'être décrite, les vibrations et irrégularités sont également amorties par les organes élastiques à activation conditionnelle 28A, 28B de l'amortisseur principal A1 et par les quatrièmes moyens de frottement à activation conditionnelle (surfaces F4, F'4, G4, G'4) associés à l'amortisseur principal A1, lorsque le débattement angulaire entre les rondelles de guidage 16A, 16B et le voile annulaire 24 de l'amortisseur principal A1 s'effectue selon l'un ou l'autre des sens de rotation rétro ou direct illustrés par les flèches R et D à la figure 3.

Par convention, on appelle généralement sens direct D, le sens habituel de rotation permettant de transmettre un couple provenant du moteur vers l'arbre mené, et sens rétrograde R le sens de rotation opposé au sens direct D.

On décrira maintenant plus particulièrement le fonctionnement du système de frottement à tiroir 70.

La rondelle tiroir 72 est associée au voile annulaire 24 de l'amortisseur A1 pour freiner les chocs, de la denture interne 23 du voile 24 sur la denture externe 15e du moyeu 14, qui surviennent en particulier avec l'augmentation du couple de rotation transmis par l'embrayage à friction 10.

Dans le premier mode de réalisation, les moyens d'entraînement en rotation 74 de la rondelle tiroir 72 sont constitués par une denture interne 75.

La rondelle tiroir 72 entoure la denture externe 15e du moyeu 14 et comporte donc elle-même, selon le premier mode de réalisation, une denture interne 75 qui est destinée à engrener avec la denture externe 15e du moyeu 14, avec un jeu circonférentiel "j" prédéterminé qui est inférieur au jeu circonférentiel "J" entre les dentures 15e du moyeu 14 et 23 du voile 24, comme on peut le voir notamment sur la figure 3.

Tel qu'illustré à la figure 5, la rondelle tiroir 72 est interposée axialement entre la première rondelle de guidage 34A et la rondelle intermédiaire de frottement 78, en variante la rondelle élastique de charge 76.

Avantageusement, la rondelle intermédiaire de frottement 78 sépare respectivement la rondelle tiroir 72 de la rondelle élastique de charge 76 qui sollicite axialement, à travers la rondelle intermédiaire de frottement 78, la rondelle tiroir 72 en direction de la face distale 34D de la rondelle de guidage 34A et donc de la première surface de frottement S1.

Au régime de ralenti, la denture interne 23 du voile 24 et la denture interne 75 de la rondelle tiroir 72 restent écartées de la denture externe 15e du moyeu 14 (figure 3).

Quand le couple transmis augmente, les organes élastiques à activation immédiate 44A, 44B du pré-amortisseur A2 sont tout d'abord comprimés puis par les organes élastiques à activation conditionnelle 46A, 46B lorsque le débattement angulaire entre les rondelles de guidage 34A, 34B et le voile annulaire 42 dépasse l'angle seuil de pré-amortisseur A2.

La denture interne 23 du voile 24 et la denture interne 75 de la rondelle tiroir 72 se déplacent alors par rapport au moyeu 14, la rondelle tiroir 72 étant appliquée avec une force axiale sur la rondelle de guidage 34A par la rondelle élastique de charge 76 qui est liée en rotation à la rondelle de guidage 16A de l'amortisseur A1 est donc ainsi indirectement solidaire en rotation du voile 24.

Quand le couple transmis augmente, le jeu circonférentiel j prédéterminé étant annulé, la denture 75 de la rondelle tiroir 72 va venir buter sur la denture 15e du moyeu 14 de sorte que la rondelle tiroir 72 soit solidaire en rotation du moyeu 14.

Quand le couple transmis augmente encore, le denture 23 du voile 24 se rapproche de la denture 15e du moyeu 14 jusqu'à venir en butée sur celle-ci, mais ce mouvement est freiné par le frottement de la rondelle tiroir 72 contre la rondelle de guidage 34A, l'importance du frottement étant en particulier déterminée par les matériaux choisis et la force axiale développée par la rondelle élastique de charge 76.

Si lors de ce mouvement, le frottement de la rondelle tiroir 72 contre la première surface de frottement S1 de la face distale 34D de la première rondelle de guidage 34A provoque l'essentiel du freinage, il est à noter que les frottements produits par le système d'hystérésis 62 agencé radialement au dessus participe aussi à créer un certain freinage ou ralentissement.

De manière connue, après montage du voile 42 sur le moyeu 14, la liaison en rotation sans jeu entre le voile annulaire 42 et le moyeu 14 est généralement réalisée par sertissage, par exemple par écrasement axial d'une partie de la denture externe 15e de manière à assurer une parfaite liaison entre les pièces 14 et 42.

Or, comme l'entraînement de la rondelle tiroir 72 s'effectue ici par engrènement au moyen de la denture interne 75, un tel sertissage conventionnel par écrasement de la denture externe 15e du moyeu 14 pour réaliser la liaison avec le voile 42 n'est pas souhaitable.

En effet, une partie de la denture 15e doit être conservée libre pour permettre l'engrènement de la denture 75 de la rondelle tiroir 72.

Avantageusement, le moyeu 14 est donc réalisé par frittage dans le cas du premier mode de réalisation.

De préférence, la denture externe 15e du moyeu fritté 14 est étagée et comporte une partie, dite supérieure, pourvue de rainures afin de réaliser une liaison sans jeu par sertissage entre le voile 42 du pré-amortisseur A2 et la denture 15e, et une partie adjacente, dite inférieure, qui reste libre axialement pour permettre l'engrènement de la rondelle tiroir 72 suivant le jeu circonférentiel j prédéterminé.

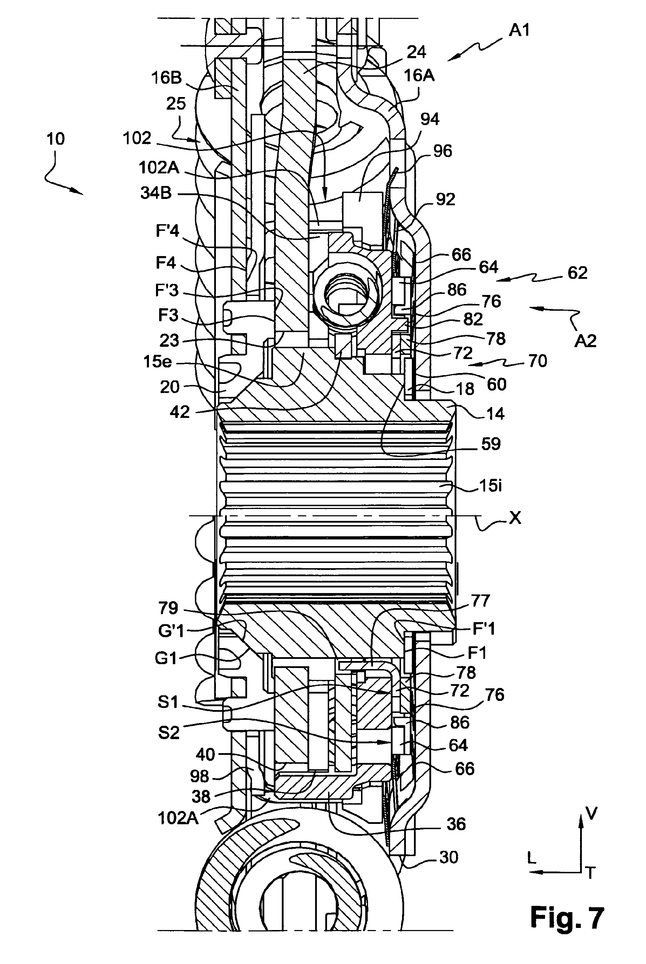

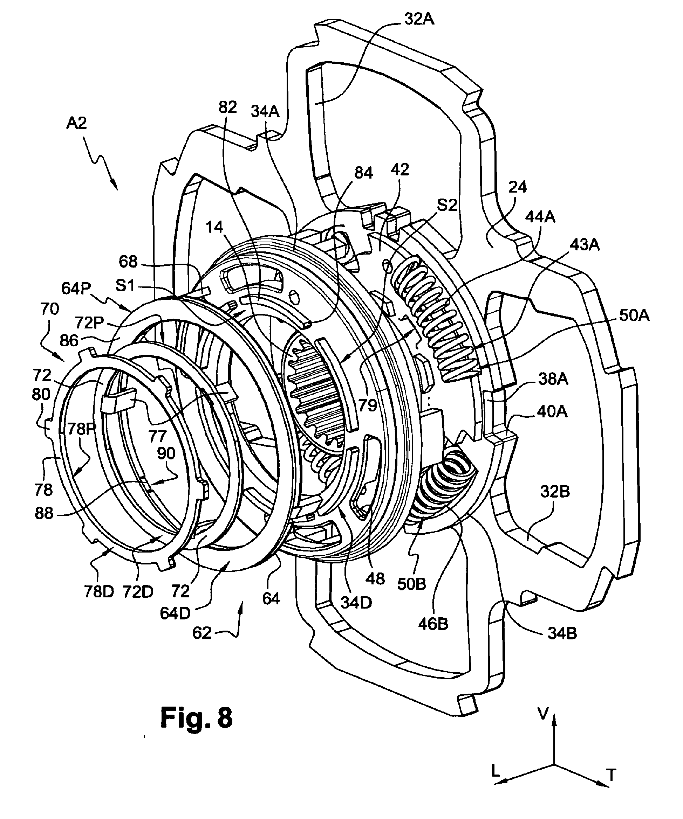

On décrira maintenant, par comparaison avec le premier mode de réalisation décrit précédemment, un deuxième mode de réalisation d'un embrayage à friction 10 selon l'invention qui est illustré aux figures 7 à 9.

Dans ce deuxième mode de réalisation, les moyens d'entraînement en rotation 74 de la rondelle tiroir 72 sont constitués par au moins une patte d'entraînement 77 qui remplace l'entraînement par engrènement réalisé, dans le premier mode de réalisation, par la denture interne 75.

De préférence, la rondelle tiroir 72 comporte ici trois pattes d'entraînement 77 qui sont avantageusement réparties de manière régulière sur la circonférence de la rondelle tiroir 72 et qui s'étendent axialement à partir du bord circulaire interne de la rondelle tiroir 72.

Plus précisément, les pattes d'entraînement 77 s'étendent axialement en saillie en direction des rondelles de guidage 34A, 34B et du voile 42 du pré-amortisseur A2 et sont sensiblement orthogonales à la face proximale 72P qui s'étend dans un plan vertical.

Comme illustré par la figure 7, les pattes d'entraînement 77 traversent axialement la première rondelle de guidage 34A en passant centralement à l'intérieur de la rondelle 34A.

Avantageusement, le diamètre interne de la première rondelle de guidage 34A est sensiblement supérieur au diamètre externe des pattes d'entraînement 77 de sorte que la face proximale de frottement 72P de la rondelle tiroir est apte à coopérer avec la deuxième surface de frottement S2 portée par la face distale 34D de la première rondelle de guidage 34A, sans que les pattes d'entraînement 77 n'interfèrent pour autant avec la première rondelle de guidage 34A.

Chaque patte d'entraînement 77 est reçue dans une encoche 79 complémentaire du voile 42 du pré-amortisseur A2, l'un des bords de l'encoche 79 formé par la tranche du voile 42 étant destiné à coopérer avec la patte d'entraînement 77 associée afin de l'entraîner en rotation après annulation du jeu circonférentiel j' entre la patte d'entraînement 77 de la rondelle tiroir 72 et l'encoche 79 du voile 42.

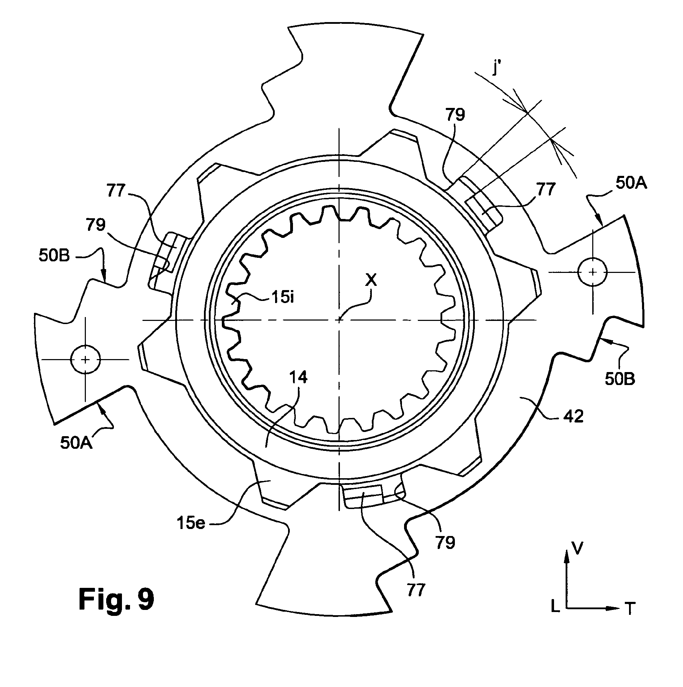

Comme précédemment, le jeu circonférentiel j' existant entre la patte d'entraînement 77 et l'encoche 79 est inférieur au jeu circonférentiel J précité entre la denture externe 15e du moyeu 14 et la denture interne 23 du voile 24 de l'amortisseur A1 comme cela est illustré à la figure 9.

Avantageusement, les encoches 79 destinées à coopérer avec les pattes 77 sont agencées à la périphérie radiale interne du voile 42 de pré-amortisseur A2 et sont ouvertes verticalement vers l'intérieur, c'est à dire en direction du moyeu 14.

Un tel positionnement des encoches 79 à la périphérie interne permet d'éviter les interférences avec les autres éléments comme la première rondelle de guidage 34A mais permet surtout de ne pas altérer la résistance mécanique générale du voile 42 du pré-amortisseur A2, en particulier dans la partie radialement externe comportant les fenêtres 50a, 50B.

Dans ce deuxième mode de réalisation, l'entraînement en rotation de la rondelle tiroir 72 étant obtenu par la coopération des pattes 77 et des encoches 79 du voile 42, il n'est plus nécessaire de conserver une partie de la denture externe 15e du moyeu 14 pour l'engrènement de la rondelle tiroir 72.

Avantageusement, le montage du voile 42 du pré-amortisseur A2 sur le moyeu 14 est donc réalisé conventionnellement par sertissage et le moyeu 14 peut dès lors ne pas être fabriqué par frittage ce qui en réduit le coût.

Avantageusement, selon les premier et deuxième modes de réalisation de l'invention, le système de frottement à tiroir 70 constitue une solution fiable et économique pour limiter les bruits indésirables provoqués par les chocs entre la denture externe 15e du moyeu 14 et la denture interne 23 du voile 24.

Pour ce faire, la rondelle tiroir 72, en coopérant par frottement respectivement avec la rondelle de guidage 34A et la rondelle intermédiaire de frottement 78, agit comme un frein destiné à éviter que lesdites dentures 15e et 23 ne s'entrechoquent brutalement.

Toutefois, pour certaines applications très particulières, il est possible qu'une telle rondelle tiroir 72 ne soit encore pas suffisante pour supprimer totalement les bruits indésirables.

Avantageusement, le système de frottement à tiroir 70 est alors complété par des moyens de butée angulaire déformables élastiquement qui, aptes à absorber tout ou partie du choc lorsque la denture externe 15e du moyeu 14 et la denture interne 23 du voile 24 s'entrechoquent, interviennent après le freinage opérée par la rondelle tiroir 72.

De tels moyens de butée angulaire déformables élastiquement sont par exemple décrit dans le document FR-A-2.725.256.

Toutefois, conformément à ce document de l'état de la technique, la butée angulaire déformable élastiquement est susceptible d'être déformée sans limite, par écrasement, ce qui participe à en réduire la durée de vie en accélérant notamment son usure.

C'est la raison pour laquelle, le pré-amortisseur A2 de l'embrayage à friction 10 comporte avantageusement :
- des premiers moyens de butée 106 comportant au moins une butée angulaire déformable élastiquement qui est agencée sur l'une 34B des rondelles de guidage 34A, 34B formant l'élément d'entrée du pré-amortisseur A2 et qui, lorsque ladite rondelle de guidage 34B se déplace dans au moins l'un des sens de rotation direct D ou rétrograde R, est apte à amortir les chocs entre la denture externe 15e du moyeu 14 et la denture interne 23 du voile 24 de l'amortisseur A1, et
- des seconds moyens de butée 108 comportant au moins une butée angulaire rigide qui est disposée en retrait angulairement par rapport à la butée angulaire déformable élastiquement pour limiter la déformation angulaire des premiers moyens de butée et qui est constituée par au moins l'une des faces de la denture interne 23 du voile 24 qui forme l'élément de sortie de l'amortisseur principal A1.

Les premiers moyens de butée 106 sont plus particulièrement visibles sur la figure 2 tandis que les seconds moyens de butée 108 le sont sur la figure 3.

Lorsque les vibrations sont importantes, la denture externe 15e formant une butée angulaire du moyeu 14 qui constitue l'organe de sortie de l'embrayage à friction 10 vient en contact avec les premiers moyens de butée déformables élastiquement 106 qui, après avoir été préalablement freiné par le frottement de la rondelle tiroir 72, se déforment alors en absorbant le choc et cela jusqu'à ce que la denture externe 15e vienne en contact avec les seconds moyens de butée angulaire rigide 108.

Avantageusement, les premiers moyens de butée déformable élastiquement 106 sont portés par la seconde rondelle de guidage 34B, tandis que les seconds moyens de butée angulaire rigide 108 sont portés par le voile 24 de l'amortisseur A1.

Tel qu'illustré à la figure 2, la seconde rondelle de guidage 34B du pré-amortisseur comporte les premiers moyens de butée 106 constitués par des plots déformables élastiquement, par exemple réalisés en caoutchouc naturel ou synthétique, présentant globalement une forme en "T".

Les plots 106 sont agencés sur la périphérie interne de la rondelle 34B, dans des évidements complémentaires, et sont susceptibles de coopérer avec les butées angulaires du moyeu 14, c'est-à-dire l'une des faces obliques que comporte chacune des dents formant la denture externe 15e, lorsque le débattement entre le moyeu 14 et l'ensemble rotatif que forment les rondelles de guidage 34A, 32B du pré-amortisseur A2 solidaires en rotation du voile 24 de l'amortisseur principal A1, atteint une valeur prédéterminée ici dans le sens direct D.

Les plots déformables élastiquement 106 sont agencés sur la seconde rondelle de guidage 34B de manière que chaque butée angulaire rigide 108 formée par une face de la denture interne 23 du voile 24 soit en retrait angulairement par rapport à chaque plot 106 formant la butée angulaire déformable.

En effet, chaque butée angulaire rigide 108 formée par une face de la denture interne 23 du voile 24 est aussi destinée à coopérer avec la butée angulaire formée par au moins l'une des faces de la denture externe 15e selon le sens de rotation direct D ou rétro R.

Ainsi, lorsque la face de butée angulaire de chaque dent de la denture externe 15e du moyeu 14 vient en contact avec le plot déformable 106 correspondant, celui-ci se déforme en absorbant le choc jusqu'à ce que la face de butée angulaire de la dent vienne en contact avec la butée angulaire rigide formée par une face correspondante de la dent correspondante de la denture interne 23 du voile 24.

Grâce à l'action conjuguée de tels moyens 106, 108 et du système à tiroir 70, les chocs entre la denture externe 15e du moyeu 14 et la denture interne 23 du voile 24, sont successivement freinés et amortis de sorte que les bruits indésirables correspondants sont totalement supprimés.

Pour de plus amples détails sur la réalisation des tels dispositifs pourvus de premiers moyens de butée 106 comportant au moins une butée angulaire déformable élastiquement et de seconds moyens de butée 108 comportant au moins une butée angulaire rigide qui est disposée en retrait angulairement par rapport à la butée angulaire déformable élastiquement pour limiter la déformation angulaire des premiers moyens de butée, on pourra se reporter à la demande de brevet français N° 06.52057 de la Demanderesse déposée le 08.06.2006 (non publiée).

Dans le premier et le deuxième modes de réalisation selon l'invention qui ont été décrits précédemment, l'amortisseur principal A1 est un amortisseur comportant deux étages d'amortissement qui est encore appelé un amortisseur bi-pentes en raison de la courbe correspondante obtenue en représentant le couple transmis en fonction du débattement angulaire.

Avantageusement, le pré-amortisseur A2 est un amortisseur du type bi-pentes comportant deux étages d'amortissement.

La figure 3 du document FR-A-2.804.190 représente un exemple de représentation graphique du couple transmis (en ordonnée) en fonction du débattement angulaire (en abscisse) d'un embrayage à friction comportant de manière analogue quatre étages d'amortissement.

Comme cela est représenté sur cette figure 3 et expliqué dans partie correspondante de la description à laquelle on se reportera avantageusement, la courbe comportent alors quatre parties distinctes, respectivement des parties A et B qui correspondent aux deux étages du pré-amortisseur A2 et des parties C et D qui correspondent aux étages de l'amortisseur principal A1.

Selon une variante non représentée, l'amortisseur principal A1 est un amortisseur à un étage d'amortissement, encore appelé un amortisseur monopente.

Par comparaison, les moyens d'amortissement 25 de l'amortisseur principal sont alors constitués uniquement par des organes élastiques à activation immédiate, tels que quatre ressorts hélicoïdaux 26.

Les fenêtres 32 du voile 24 sont toutes identiques et ne sont pas donc différenciées (32A, 32B) comme précédemment en fonction des moyens d'amortissement 25 associés ainsi qu'illustré à la figure 3.

Les moyens d'hystérésis associés à l'amortisseur principal A1 sont similaires, en particulier les troisièmes moyens décrits précédemment. Par comparaison, la première rondelle de frottement 98 des quatrièmes moyens décrits précédemment ne comporte ici plus de pattes d'activation 104 qui sont supprimées dès lors que les moyens d'amortissement 25 sont tous à activation immédiate.

## Revendications

1. Embrayage à friction (10), notamment pour véhicule automobile, comportant :
- un amortisseur principal (A1) interposé entre un élément d'entrée, tel qu'un disque de friction (12), et un voile annulaire (24) entourant un moyeu (14) solidaire en rotation d'un arbre mené, le moyeu (14) comportant une denture externe (15e) destinée à engrener avec un jeu circonférentiel (J) avec une denture interne (23) du voile (24),
dans lequel l'amortisseur principal (A1) comporte des première (16A) et seconde (16B) rondelles principales de guidage solidaires en rotation entre elles, et un voile annulaire (24) qui, solidaire en rotation des première et seconde rondelles de guidage (34A, 34B) d'un amortisseur secondaire (A2), est coaxial aux rondelles principales de guidage (16A, 16B) et mobile en rotation par rapport à ces rondelles principales de guidage (16A, 16B) et comportant, couplé en série avec l'amortisseur principal (A1),
- l'amortisseur secondaire (A2), dit pré-amortisseur, comportant les première (34B) et seconde (34A) rondelles de guidage solidaires en rotation entre elles, un voile annulaire (42) coaxial aux rondelles de guidage (34A, 34B) et mobile en rotation par rapport aux rondelles de guidage (34A, 34B), des moyens d'amortissement à activation immédiate (43A) et des moyens d'amortissement à activation conditionnelle (43B) qui comportent un groupe d'organes élastiques à activation conditionnelle (46A, 46B) transmettant un couple entre les rondelles de guidage (34A, 34B) et le voile annulaire (42), et
- un système de frottement à hystérésis variable (62), dit système d'hystérésis, du pré-amortisseur (A2) comportant des moyens d'hystérésis à activation conditionnelle qui, agencés entre le voile (42) du pré-amortisseur et la première rondelle principale de guidage (16A) de l'amortisseur (A1), comportent au moins une rondelle d'hystérésis variable (64, 86) et une rondelle élastique d'application (66) de la rondelle d'hystérésis variable (64) qui comporte, pour son activation, au moins une patte d'activation (68) liée angulairement avec un organe élastique (46A, 46B) associé,
**caractérisé en ce que** l'embrayage à friction (10) comporte un système de frottement à tiroir (70) comportant au moins une rondelle de frottement (72), dite rondelle tiroir, dans lequel la rondelle tiroir (72) comporte des moyens d'entraînement (74, 75, 77) destinés à entraîner en rotation la rondelle tiroir (72) avec un jeu circonférentiel (j, j') inférieur au jeu circonférentiel (J) précité entre la denture externe (15e) du moyeu (14) et la denture interne (23) du voile (24) de l'amortisseur (A1) et dans lequel la rondelle tiroir (72) est interposée axialement entre la rondelle de guidage (34A) du pré-amortisseur (A2) et une rondelle élastique de charge (76) associée qui est destinée à solliciter la rondelle tiroir (72) avec une force élastique axiale déterminée de manière à constituer un système de frottement à tiroir (70) de type indépendant.

2. Embrayage à friction (10) selon la revendication 1, **caractérisé en ce que** la rondelle tiroir (72) comporte respectivement une face distale de frottement (72D) qui est destinée à coopérer avec une face proximale de frottement (76P, 78P) associée et une face proximale de frottement (72P) qui est destinée à coopérer avec une première surface de frottement (S1) portée par la face distale (34D) de la première rondelle de guidage (34A) du pré-amortisseur (A2).

3. Embrayage à friction (10) selon la revendication 2, **caractérisé en ce que** ladite face proximale de frottement (76P) destinée à coopérer avec la face distale de frottement (72D) de la rondelle tiroir (72) est portée par la rondelle élastique de charge (76) du système de frottement à tiroir (70).

4. Embrayage à friction (10) selon l'une des revendications 1 ou 2, **caractérisé en ce que** le système de frottement à tiroir (70) comporte une rondelle intermédiaire de frottement (78) qui, libre axialement, est interposée axialement entre la rondelle tiroir (72) et la rondelle élastique de charge (76) et qui est liée en rotation sans jeu par des moyens de liaison (80), tels que des pattes, à la première rondelle de guidage (34A) du pré-amortisseur (A2).

5. Embrayage à friction (10) selon la revendication 4 prise en combinaison avec la revendication 2, **caractérisé en ce que** la face proximale de frottement (78P) destinée à coopérer avec la face distale de frottement (72D) de la rondelle tiroir (72) est portée par la rondelle intermédiaire de frottement (78) et **en ce que** la rondelle intermédiaire de frottement (78) comporte une face distale de frottement (78D) destinée à coopérer avec une face proximale de frottement (76P) portée par la rondelle élastique de charge (76) du système de frottement à tiroir (70).

6. Embrayage à friction (10) selon l'une quelconque des revendications 1 à 5, dans lequel la rondelle d'hystérésis comporte respectivement une face proximale de frottement (64P) et une face distale de frottement (64D), la face distale de frottement (64D) étant destinée à coopérer avec une face de frottement (66P) portée par la rondelle élastique d'application (66) et la face proximale de frottement (64P) étant destinée à coopérer avec une deuxième surface de frottement (S2) portée par la face distale (34D) de la première rondelle de guidage (34A) du pré-amortisseur (A2), **caractérisé en ce que** la première surface de frottement (S1) associée à la rondelle tiroir (72) est disposée radialement à l'intérieur de la deuxième surface de frottement (S2) associée à la rondelle d'hystérésis (64) de manière que la face distale (34D) de la première rondelle de guidage (34A) comporte des première et deuxième surfaces de frottement (S1, S2) formant respectivement des première et deuxième pistes annulaires concentriques.

7. Embrayage à friction (10) selon la revendication 6, **caractérisé en ce que** la première rondelle de guidage (34A) comporte un élément annulaire (82) qui s'étend axialement en saillie à partir de la face distale (34D) et qui est agencé radialement entre lesdites première et deuxième surfaces de frottement (S1, S2) concentriques, ledit élément (82) comportant des moyens d'entraînement (84) destinés à coopérer avec les moyens de liaison (80) de la rondelle intermédiaire de frottement (78) de manière que la rondelle de guidage (34A) soit apte à entraîner en rotation sans jeu circonférentiel la rondelle intermédiaire de frottement (78), tout en laissant ladite rondelle intermédiaire de frottement (78) libre axialement par rapport à la rondelle de guidage (34A).

8. Embrayage à friction (10) selon l'une quelconque des revendications précédentes, **caractérisé en ce que** les moyens d'entraînement en rotation (74) de la rondelle tiroir (72) sont constitués par une denture interne (75) qui est apte à engrener avec la denture externe (15e) du moyeu (14) avec un jeu circonférentiel (j) inférieur au jeu circonférentiel (J) précité entre la denture externe (15e) du moyeu (14) et la denture interne (23) du voile (24) de l'amortisseur (A1).

9. Embrayage à friction (10) selon l'une quelconque des revendications 1 à 7, **caractérisé en ce que** les moyens d'entraînement en rotation (74) de la rondelle tiroir (72) sont constitués par au moins une patte d'entraînement (77) qui s'étend axialement et qui est reçue dans une encoche (79) complémentaire du voile (42) du pré-amortisseur (A2), le voile (42) étant apte à entraîner ladite patte (77) avec un jeu circonférentiel (j') inférieur au jeu circonférentiel (J) précité entre la denture externe (15e) du moyeu (14) et la denture interne (23) du voile (24) de l'amortisseur (A1).

10. Embrayage à friction (10) selon l'une des revendications précédentes, **caractérisé en ce que** la rondelle tiroir (72) est réalisée dans un matériau métallique, tel que de l'acier ou un matériau analogue.

11. Embrayage à friction (10) selon l'une quelconque des revendications 4 à 10, **caractérisé en ce que** la rondelle intermédiaire de frottement (78) du système à tiroir (70), disposée axialement entre la rondelle tiroir (72) et la rondelle élastique de charge (76), est réalisée dans un matériau métallique, tel que de l'acier ou un matériau analogue.

12. Embrayage à friction (10) selon l'une quelconque des revendications précédentes, **caractérisé en ce que** la rondelle d'hystérésis (64) est réalisée en un matériau métallique, tel que de l'acier, et **en ce que** au moins la face distale de frottement (64D) est portée par une rondelle de frottement (86) en matière plastique qui est solidaire en rotation de la rondelle d'hystérésis (64) de manière à créer un frottement mixte de type acier/plastique avec respectivement la première rondelle de guidage (34A) en matière plastique et la rondelle élastique d'application (66) en acier.

13. Embrayage à friction (10) selon l'une quelconque des revendications précédentes, **caractérisé en ce que** la patte d'activation (68) de la rondelle d'hystérésis (64) comporte des surfaces de contact avec respectivement l'organe élastique (46A, 46B) à activation conditionnelle associé et le voile (42) du pré-amortisseur (A2), la surface de contact de la patte d'activation (68) avec l'organe élastique comportant des moyens d'accrochage destinés à coopérer avec l'organe élastique à activation conditionnelle (46A, 46B) associé afin d'accrocher la rondelle d'hystérésis (64) sur le pré-amortisseur (A2).

14. Embrayage à friction (10) selon l'une quelconque des revendications précédentes, **caractérisé en ce que** l'embrayage à friction (10) comporte un module pré-assemblé constitué au moins par les rondelles de guidage (34A, 34B), le voile (42) du pré-amortisseur (A2), les moyens d'amortissement (43A, 43B) comportant au moins un organe élastique (46A, 46B) à activation conditionnelle, la rondelle intermédiaire de frottement (78) associée à la rondelle tiroir (72) et la rondelle d'hystérésis (64).

15. Embrayage à friction (10) selon l'une quelconque des revendications précédentes, **caractérisé en ce que** l'embrayage à friction (10) comporte :
- des premiers moyens de butée (106) comportant au moins une butée angulaire déformable élastiquement qui est agencée sur l'une (34B) des rondelles de guidage (34A, 34B) formant l'élément d'entrée du pré-amortisseur (A2) et qui, lorsque ladite rondelle de guidage (34B) se déplace dans au moins l'un des sens direct (D) ou rétrograde (R), est apte à amortir les chocs entre la denture externe (15e) du moyeu (14) et la denture interne (23) du voile (24) de l'amortisseur (A1), et
- des seconds moyens de butée (108) comportant au moins une butée angulaire rigide qui est disposée en retrait angulairement par rapport à la butée angulaire déformable élastiquement pour limiter la déformation angulaire des premiers moyens de butée et qui est constituée par au moins l'une des faces de la denture interne (23) du voile (24) qui forme l'élément de sortie de l'amortisseur principal (A1).

## Patentansprüche

1. Reibungskupplung (10), insbesondere für Kraftfahrzeug, die Folgendes umfasst:
- einen Hauptdämpfer (A1), der zwischen ein Eingangselement, wie zum Beispiel eine Reibungsscheibe (12), und einen ringförmigen Flansch (24) eingefügt ist, der eine Nabe (14) umgibt, die in Drehung mit einer Abtriebswelle fest verbunden ist, wobei die Nabe (14) eine Außenverzahnung (15e) umfasst, die dazu bestimmt ist, in ein umfängliches Spiel (J) mit einer Innenverzahnung (23) des Elements (24) einzugreifen,
wobei der Hauptdämpfer (A1) erste (16A) und zweite (16B) Hauptführungsunterlegscheiben umfasst, die in Drehung miteinander fest verbunden sind, und einen ringförmigen Flansch (24), der in Drehung mit der ersten und zweiten Führungsunterlegscheibe (34A, 34B) eines Sekundärdämpfers (A2) fest verbunden ist, zu den Hauptführungsunterlegscheiben (16A, 16B) koaxial und in Drehung in Bezug auf diese Hauptführungsunterlegscheiben (16A, 16B) beweglich ist und, in Serie mit dem Hauptdämpfer (A1) Folgendes umfasst:
- den Sekundärdämpfer (A2), Vordämpfer genannt, der die erste (34B) und zweite (34A) Führungsunterlegscheibe umfasst, die in Drehung miteinander fest verbunden sind, einen ringförmigen Flansch (42) koaxial zu den Führungsunterlegscheiben (34A, 34B) und in Drehung in Bezug auf die Führungsunterlegscheiben (34A, 34B) beweglich, Dämpfmittel mit sofortiger Aktivierung (43A) und Dämpfmittel mit bedingter Aktivierung (43B), die eine Gruppe elastischer Organe mit bedingter Aktivierung (46A, 46B) umfassen, die ein Drehmoment zwischen den Führungsunterlegscheiben (34A, 34B) und dem ringförmigen Flansch (42) übertragen, und
- ein Reibungssystem mit variabler Hysterese (62), Hysteresesystem genannt, des Vordämpfers (A2), der Hysteresemittel mit bedingter Aktivierung umfasst, die, zwischen dem Flansch (42) des Vordämpfers und der ersten Hauptführungsunterlegscheibe (16A) des Dämpfers (A1) angeordnet, mindestens eine Unterlegscheibe mit variabler Hysterese (64, 86) und eine elastische Anlegeunterlegscheibe (66) der Scheibe mit variabler Hysterese (64) umfassen, die zu ihrer Aktivierung mindestens eine Aktivierungspratze (68) umfasst, die winkelig mit einem dazu gehörenden elastischen Organ (46A, 46B) verbunden ist,
**dadurch gekennzeichnet, dass** die Reibungskupplung (10) ein Reibungssystem mit Schieber (70) umfasst, das mindestens eine Reibungsunterlegscheibe (72), Schieberunterlegscheibe genannt, umfasst, wobei die Schieberunterlegscheibe (72) Antriebsmittel (74, 75, 77) umfasst, die dazu bestimmt sind, die Schieberunterlegscheibe (72) in Drehung mit einem umfänglichen Spiel (j, j') anzutreiben, das kleiner ist als das oben erwähnte umfängliche Spiel (J) zwischen der Außenverzahnung (15e) der Nabe (14) und der Innenverzahnung (23) des Flanschs (24) des Dämpfers (A1), und wobei die Schieberunterlegscheibe (72) axial zwischen die Führungsunterlegscheibe (34A) des Vordämpfers (A2) und eine dazugehörende elastische Lastunterlegscheibe (76) eingefügt ist, die dazu bestimmt ist, die Schieberunterlegscheibe (72) mit einer bestimmten axialen elastischen Kraft derart zu beanspruchen, dass ein Reibungssystem mit Schieber (70) unabhängigen Typs gebildet wird.

2. Reibungskupplung (10) nach Anspruch 1, **dadurch gekennzeichnet, dass** die Schieberunterlegscheibe (72) jeweils eine distale Reibungsseite (72D) umfasst, die dazu bestimmt ist, mit einer dazugehörenden proximalen Reibungsseite (76P, 78P) und einer proximalen Reibungsseite (72P) zusammenzuwirken, die dazu bestimmt ist, mit einer ersten Reibungsoberfläche (S1), die von der distalen Seite (34D) der ersten Führungsunterlegscheibe (34A) des Vordämpfers (A2) getragen wird, zusammenzuwirken.

3. Reibungskupplung (10) nach Anspruch 2, **dadurch gekennzeichnet, dass** die proximale Reibungsseite (76P), die dazu bestimmt ist, mit der distalen Reibungsseite (72D) der Schieberunterlegscheibe (72) zusammenzuwirken, von der elastischen Lastunterlegscheibe (76) des Reibungssystems mit Schieber (70) getragen wird.

4. Reibungskupplung (10) nach einem der Ansprüche 1 oder 2, **dadurch gekennzeichnet, dass** das Reibungssystem mit Schieber (70) eine Reibungszwischenunterlegscheibe (78) umfasst, die axial frei axial zwischen die Schieberunterlegscheibe (72) und die elastische Lastunterlegscheibe (76) eingefügt ist und in Drehung spielfrei von Verbindungsmitteln (80), wie zum Beispiel Pratzen, mit der ersten Führungsunterlegscheibe (34A) des Vordämpfers (A2) verbunden ist.

5. Reibungskupplung (10) nach Anspruch 4, kombiniert genommen mit Anspruch 2, **dadurch gekennzeichnet, dass** die proximale Reibungsseite (78P), die dazu bestimmt ist, mit der distalen Reibungsseite (72D) der Schieberunterlegscheibe (72) zusammenzuwirken, von der Zwischenreibungsunterlegscheibe (78) getragen wird, und dass die Zwischenreibungsunterlegscheibe (78) eine distale Reibungsseite (78D) umfasst, die dazu bestimmt ist, mit einer proximalen Reibungsseite (76P) zusammenzuwirken, die von der elastischen Lastunterlegscheibe (76) des Reibungssystems mit Schieber (70) getragen wird.

6. Reibungskupplung (10) nach einem der Ansprüche 1 bis 5, wobei die Hystereseunterlegscheibe jeweils eine proximale Reibungsseite (64P) und eine distale Reibungsseite (64D) umfasst, wobei die distale Reibungsseite (64D) dazu bestimmt ist, mit einer Reibungsseite (66P) zusammenzuwirken, die von der elastischen Anlegeunterlegscheibe (66) getragen wird, und die proximale Reibungsseite (64P) dazu bestimmt ist, mit einer zweiten Reibungsoberfläche (S2) zusammenzuwirken, die von der distalen Seite (34D) der ersten Führungsunterlegscheibe (34A) des Vordämpfers (A2) getragen wird, **dadurch gekennzeichnet, dass** die erste Reibungsoberfläche (S1), die mit der Schieberunterlegscheibe (72) assoziiert ist, radial im Inneren der zweiten Reibungsoberfläche (S2), die mit der Hystereseunterlegscheibe (64) assoziiert ist, derart angeordnet ist, dass die distale Seite (34D) der ersten Führungsunterlegscheibe (34A) erste und zweite Reibungsoberflächen (S1, S2) umfasst, die jeweils erste und zweite konzentrische ringförmige Bahnen bilden.

7. Reibungskupplung (10) nach Anspruch 6, **dadurch gekennzeichnet, dass** die erste Führungsunterlegscheibe (34A) ein ringförmiges Element (82) umfasst, das sich axial ausgehend von der distalen Seite (34D) vorstehend erstreckt und radial zwischen der ersten und zweiten konzentrischen Reibungsoberfläche (S1, S2) angeordnet ist, wobei das Element (82) Antriebsmittel (84) umfasst, die dazu bestimmt sind, mit den Verbindungsmitteln (80) der Reibungszwischenunterlegscheibe (78) derart zusammenzuwirken, dass die Führungsunterlegscheibe (34A) geeignet ist, die Reibungszwischenunterlegscheibe (78) ohne umfängliches Spiel in Drehung anzutreiben, während die Reibungszwischenunterlegscheibe (78) axial in Bezug auf die Führungsunterlegscheibe (34A) frei bleibt.

8. Reibungskupplung (10) nach einem der vorhergehenden Ansprüche, **dadurch gekennzeichnet, dass** die Mittel (74) zum Antreiben in Drehung der Schieberunterlegscheibe (72) aus einer Innenverzahnung (75) bestehen, die geeignet ist, um mit der Außenverzahnung (15e) der Nabe (14) mit einem umfänglichen Spiel (j) einzugreifen, das kleiner ist als das oben erwähnte umfängliche Spiel (J) zwischen der Außenverzahnung (15e) der Nabe (14) und der Innenverzahnung (23) des Flanschs (24) des Dämpfers (A1).

9. Reibungskupplung (10) nach einem der Ansprüche 1 bis 7, **dadurch gekennzeichnet, dass** die Mittel (74) zum Antreiben in Drehung der Schieberunterlegscheibe (72) aus mindestens einer Betägigungspratze (77) bestehen, die sich axial erstreckt und in einer komplementären Kerbe (79) des Flanschs (42) des Vordämpfers (A2) aufgenommen ist, wobei der Flansch (42) geeignet ist, die Pratze (77) mit einem umfänglichen Spiel (j') anzutreiben, das kleiner ist als das oben erwähnte umfängliche Spiel (J) zwischen der Außenverzahnung (15e) der Nabe (14) und der Innenverzahnung (23) des Flanschs (24) des Dämpfers (A1).

10. Reibungskupplung (10) nach einem der vorhergehenden Ansprüche, **dadurch gekennzeichnet, dass** die Schieberunterlegscheibe (72) aus einem metallischen Werkstoff, wie zum Beispiel Stahl, oder einem analogen Werkstoff hergestellt ist.

11. Reibungskupplung (10) nach einem der Ansprüche 4 bis 10, **dadurch gekennzeichnet, dass** die Reibungszwischenunterlegscheibe (78) des Systems mit Schieber (70), die axial zwischen der Schieberunterlegscheibe (72) und der elastischen Lastscheibe (76) angeordnet ist, aus einem metallischen Werkstoff, wie zum Beispiel Stahl, besteht.

12. Reibungskupplung (10) nach einem der vorhergehenden Ansprüche, **dadurch gekennzeichnet, dass** die Hystereseunterlegscheibe (64) aus einem metallischen Werkstoff hergestellt ist, wie zum Beispiel aus Stahl, und dass mindestens die distale Reibungsseite (64D) von einer Reibungsunterlegscheibe (86) aus Kunststoff getragen wird, die in Drehung mit der Hystereseunterlegscheibe (64) derart fest verbunden ist, dass eine gemischte Reibung des Typs Stahl/Plastik jeweils mit der ersten Führungsunterlegscheibe (34A) aus Kunststoff und der elastischen Anlegeunterlegscheibe (66) aus Stahl geschaffen wird.

13. Reibungskupplung (10) nach einem der vorhergehenden Ansprüche, **dadurch gekennzeichnet, dass** die Aktivierungspratze (68) der Hystereseunterlegscheibe (64) Berührungsoberflächen jeweils mit dem dazugehörigen elastischen Organ (46A, 46B) mit bedingter Aktivierung und dem Flansch (42) des Vordämpfers (A2) umfasst, wobei die Berührungsoberfläche der Aktivierungspratze (68) mit dem elastischen Organ Anhängmittel umfasst, die dazu bestimmt sind, mit dem dazugehörenden elastischen Organ mit bedingter Aktivierung (46A, 46B) zusammenzuwirken, um die Hystereseunterlegscheibe (64) auf dem Vordämpfer (A2) anzuhängen.

14. Reibungskupplung (10) nach einem der vorhergehenden Ansprüche, **dadurch gekennzeichnet, dass** die Reibungskupplung (10) ein zuvor zusammengefügtes Modul umfasst, das mindestens aus den Führungsunterlegscheiben (34A, 34B), dem Flansch (42) des Vordämpfers (A2), den Dämpfmitteln (43A, 43B), die mindestens ein elastisches Organ (46A, 46B) mit bedingter Aktivierung umfassen, der Reibungszwischenunterlegscheibe (78), die zu der Schieberunterlegscheibe (72) gehört, und der Hystereseunterlegscheibe (64) besteht.

15. Reibungskupplung (10) nach einem der vorhergehenden Ansprüche, **dadurch gekennzeichnet, dass** die Reibungskupplung (10) Folgendes umfasst:
- erste Anschlagmittel (106), die mindestens einen elastisch verformbaren winkeligen Anschlag umfassen, der auf einer (34B) der Führungsunterlegscheiben (34A, 34B) angeordnet ist, die das Eingangselement des Vordämpfers (A2) bildet, und die, wenn sich die Führungsunterlegscheibe (34B) in mindestens eine der direkten (D) oder rückläufigen (R) Richtung bewegt, geeignet sind, die Stöße zwischen der Außenverzahnung (15e) der Nabe (14) und der Innenverzahnung (23) des Flanschs (24) des Dämpfers (A1) zu dämpfen, und
- zweite Anschlagmittel (108), die mindestens einen starren winkeligen Anschlag umfassen, der winkelig in Bezug auf den elastisch verformbaren winkeligen Anschlag rückwärts versetzt ist, um die winkelige Verformung der ersten Anschlagmittel einzuschränken, und der aus mindestens einer der Seiten der Innenverzahnung (23) des Flanschs (24), die das Ausgangselement des Hauptdämpfers (A1) bildet, besteht.

## Claims

1. Friction clutch (10), notably for a motor vehicle, comprising:
- a main damper (A1) interposed between an input element, such as a friction disk (12), and an annular web (24) surrounding a hub (14) rotating as one with a driven shaft, the hub (14) comprising an external toothset (15e) intended to mesh with a circumferential lash (J) with an internal toothset (23) of the web (24),
in which the main damper (A1) comprises a first main guide washer (16A) and a second main guide washer (16B) which rotate as one with one another, and an annular web (24) which, rotating as one with the first and second guide washers (34A, 34B) of a secondary damper (A2), is coaxial with the main guide washers (16A, 16B) and able to rotate with respect to these main guide washers (16A, 16B) and comprising, coupled in series with the main damper (A1),
- the secondary damper (A2), referred to as pre-damper, comprising the first guide washer (34B) and second guide washer (34A) which rotate as one with one another, an annular web (42) coaxial with the guide washers (34A, 34B) and able to rotate with respect to the guide washers (34A, 34B), immediate-activation damping means (43A) and conditional-activation damping means (43B) which comprise a group of conditional-activation elastic members (46A, 46B) transmitting torque between the guide washers (34A, 34B) and the annular web (42), and
- a variable-hysteresis friction system (62), referred to as a hysteresis system of the pre-damper (A2) comprising conditional-activation hysteresis means which, arranged between the web (42) of the pre-damper and the first main guide washer (16A) of the damper (A1), comprise at least one variable-hysteresis washer (64, 86) and an elastic application washer (66) of the variable-hysteresis washer (64) which, for its activation, comprises at least one activation tab (68) angularly connected to an associated elastic member (46A, 46B),
**characterized in that** the friction clutch (10) comprises a slider friction system (70) comprising at least one friction washer (72), referred to as slider washer, in which the slider washer (72) comprises drive means (74, 75, 77) intended to drive the rotation of the slider washer (72) with a circumferential lash (j, j') smaller than the aforementioned circumferential lash (J) between the external toothset (15e) of the hub (14) and the internal toothset (23) of the web (24) of the damper (A1) and in which the slider washer (72) is interposed axially between the guide washer (34A) of the pre-damper (A2) and an associated elastic loading washer (76) which is intended to load the slider washer (72) with a determined axial elastic force so as to form a slider friction system (70) of independent type.

2. Friction clutch (10) according to Claim 1, **characterized in that** the slider washer (72) respectively comprises a distal friction face (72D) which is intended to collaborate with an associated proximal friction face (76P, 78P) and a proximal friction face (72P) which is intended to collaborate with a first friction surface (S1) borne by the distal face (34D) of the first guide washer (34A) of the pre-damper (A2).

3. Friction clutch (10) according to Claim 2, **characterized in that** the said proximal friction face (76P) intended to collaborate with the distal friction face (72D) of the slider washer (72) is borne by the elastic loading washer (76) of the slider friction system (70).

4. Friction clutch (10) according to either of Claims 1 and 2, **characterized in that** the slider friction system (70) comprises an intermediate friction washer (78) which, axially free, is interposed axially between the slider washer (72) and the elastic loading washer (76) and which is connected in lash-free rotation via connecting means (80) such as tabs to the first guide washer (34A) of the pre-damper (A2).

5. Friction clutch (10) according to Claim 4 considered in combination with Claim 2, **characterized in that** the proximal friction face (78P) intended to collaborate with the distal friction face (72D) of the slider washer (72) is borne by the intermediate friction washer (78) and **in that** the intermediate friction washer (78) comprises a distal friction face (78D) intended to collaborate with a proximal friction face (76P) borne by the elastic loading washer (76) of the slider friction system (70).

6. Friction clutch (10) according to any one of Claims 1 to 5, in which the hysteresis washer respectively comprises a proximal friction face (64P) and a distal friction face (64D), the distal friction face (64D) being intended to collaborate with a friction face (66P) borne by the elastic application washer (66) and the proximal friction face (64P) being intended to collaborate with a second friction surface (S2) borne by the distal face (34D) of the first guide washer (34A) of the pre-damper (A2), **characterized in that** the first friction surface (S1) associated with the slider washer (72) is arranged radially on the inside of the second friction surface (S2) associated with the hysteresis washer (64) so that the distal face (34D) of the first guide washer (34A) comprises first and second friction surfaces (S1, S2) respectively forming first and second concentric annular tracks.

7. Friction clutch (10) according to Claim 6, **characterized in that** the first guide washer (34A) comprises an annular element (82) which extends axially projecting from the distal face (34D) and which is arranged radially between the said first and second concentric friction surfaces (S1, S2), the said element (82) comprising drive means (84) intended to collaborate with the connecting means (80) of the intermediate friction washer (78) so that the guide washer (34A) is able to drive the intermediate friction washer (78) in rotation with no circumferential lash while at the same time leaving the said intermediate friction washer (78) axially free with respect to the guide washer (34A).

8. Friction clutch (10) according to any one of the preceding claims, **characterized in that** the means (74) for driving the slider washer (72) in rotation consist of an internal toothset (75) which is able to mesh with the external toothset (15e) of the hub (14) with a circumferential lash (j) smaller than the aforementioned circumferential lash (J) between the external toothset (15e) of the hub (14) and the internal toothset (23) of the web (24) of the damper (A1).

9. Friction clutch (10) according to any one of Claims 1 to 7, **characterized in that** the means (74) for driving the slider washer (72) in rotation consist of at least one drive tab (77) which extends axially and which is housed in a complementary notch (79) of the web (42) of the pre-damper (A2), the web (42) being able to drive the said tab (77) with a circumferential lash (j') smaller than the aforementioned circumferential lash (J) between the external toothset (15e) of the hub (14) and the internal toothset (23) of the web (24) of the damper (A1).

10. Friction clutch (10) according to one of the preceding claims, **characterized in that** the slider washer (72) is made from a metallic material such as steel or a similar material.

11. Friction clutch (10) according to any one of Claims 4 to 10, **characterized in that** the intermediate friction washer (78) of the slider system (70), which washer is arranged axially between the slider washer (72) and the elastic loading washer (76), is made from a metallic material such as steel or a similar material.

12. Friction clutch (10) according to any one of the preceding claims, **characterized in that** the hysteresis washer (64) is made from a metallic material such as steel, and **in that** at least the distal friction face (64D) is borne by a friction washer (86) made of plastic which rotates as one with the hysteresis washer (64) so as to create a hybrid friction of the steel/plastic type with, respectively, the first guide washer (34A) made of plastic and the elastic application washer (66) made of steel.

13. Friction clutch (10) according to any one of the preceding claims, **characterized in that** the activation tab (68) of the hysteresis washer (64) comprises contact surfaces for contact respectively with the associated conditional-activation elastic member (46A, 46B) and the web (42) of the pre-damper (A2), the contact surface of the activation tab (68) for contact with the elastic member comprising catching means intended to collaborate with the associated conditional-activation elastic member (46A, 46B) so as to attach the hysteresis washer (64) to the pre-damper (A2).

14. Friction clutch (10) according to any one of the preceding claims, **characterized in that** the friction clutch (10) comprises a preassembled module consisting at least of the guide washers (34A, 34B), the web (42) of the pre-damper (A2), the damping means (43A, 43B) comprising at least one conditional-activation elastic member (46A, 46B), the intermediate friction washer (78) associated with the slider washer (72) and the hysteresis washer (64).

15. Friction clutch (10) according to any one of the preceding claims, **characterized in that** the friction clutch (10) comprises:
- first end-stop means (106) comprising at least one elastically deformable angular end-stop which is arranged on one (34B) of the guide washers (34A, 34B) forming the input element of the pre-damper (A2) and which, when the said guide washer (34B) moves in at least one of the direct (D) or reverse (R) directions, is able to damp impacts between the external toothset (15e) of the hub (14) and the internal toothset (23) of the web (24) of the damper (A1), and
- second end-stop means (108) comprising at least one rigid angular end-stop which is angularly set back from the elastically deformable angular end-stop so as to limit the angular deformation of the first end-stop means and which consists of at least one of the faces of the internal toothset (23) of the web (24) which forms the output element of the main damper (A1).
